(19) Europäisches Patentamt
European Patent Office
Office européen des brevets

(11) EP 2 896 542 B1

(12) **EUROPEAN PATENT SPECIFICATION**

(45) Date of publication and mention of the grant of the patent:
**27.12.2017 Bulletin 2017/52**

(21) Application number: **13837596.9**

(22) Date of filing: **23.08.2013**

(51) Int Cl.:
***B60W 10/02*** *(2006.01)*
***B60L 11/14*** *(2006.01)*
***B60W 10/08*** *(2006.01)*
***F16D 25/12*** *(2006.01)*
***F16D 48/06*** *(2006.01)*
***B60L 7/14*** *(2006.01)*
***B60L 15/20*** *(2006.01)*
***B60K 6/445*** *(2007.10)*
***B60W 10/06*** *(2006.01)*
***B60W 20/00*** *(2016.01)*
***F16D 48/02*** *(2006.01)*
***B60K 6/387*** *(2007.10)*
***B60L 11/12*** *(2006.01)*

(86) International application number:
**PCT/JP2013/072612**

(87) International publication number:
**WO 2014/041992 (20.03.2014 Gazette 2014/12)**

(54) **HYBRID DRIVE DEVICE**

HYBRIDE ANTRIEBSVORRICHTUNG

DISPOSITIF D'ENTRAÎNEMENT HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2012 JP 2012199126**

(43) Date of publication of application:
**22.07.2015 Bulletin 2015/30**

(73) Proprietor: **Aisin Seiki Kabushiki Kaisha**
**Kariya-shi, Aichi 448-8650 (JP)**

(72) Inventors:
- **HANEDA, Yoshitomi**
  **Kariya-shi**
  **Aichi 448-8650 (JP)**
- **ONO, Yoshinori**
  **Anjo-shi**
  **Aichi 444-1192 (JP)**
- **NOMURA, Masaki**
  **Anjo-shi**
  **Aichi 444-1192 (JP)**
- **ISHIHARA, Yasuhiro**
  **Anjo-shi**
  **Aichi 444-1192 (JP)**
- **YOSHIMURA, Shiko**
  **Anjo-shi**
  **Aichi 444-1192 (JP)**
- **ATARASHI, Tomoo**
  **Anjo-shi**
  **Aichi 444-1192 (JP)**
- **TAKAMI, Shigeki**
  **Anjo-shi**
  **Aichi 444-1192 (JP)**
- **KOSHIDA, Takafumi**
  **Anjo-shi**
  **Aichi 444-1192 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**EP-A1- 1 496 281**
**JP-A- H09 170 630**
**JP-A- 2010 076 678**
**JP-A- 2010 202 153**
**JP-A- 2012 086 676**
**US-A1- 2010 114 442**
**EP-A2- 2 447 124**
**JP-A- H09 170 630**
**JP-A- 2010 076 678**
**JP-A- 2012 086 676**
**JP-B2- 4 394 386**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

This invention relates to a hybrid drive device which is equipped with a clutch for connecting or disconnecting the output shaft of the engine and the input shaft of a planetary gear mechanism and a motor/generator rotating in association with the rotation of the input shaft.

[Background Art]

Conventionally, a hybrid drive device has been proposed as shown in the Patent Literature 1, which is formed by an engine, a clutch connecting or disconnecting the output shaft of the engine and an input shaft of the planetary gear mechanism and a motor/generator rotating in association with the rotation of the input shaft. According to this hybrid drive device shown in the Patent Literature 1, the engine is restarted from the engine being in a stopped state by gradually increasing the engine rotation speed by gradually transmitting the torque from the motor/generator to the engine by gradually connecting the clutch which has been in a disconnected state.

The hybrid drive device according to the Patent Literature 1 calculates the target clutch actuator control amount by referencing the clutch torque necessary for starting the engine to the clutch torque map which indicates the relationship between the necessary torque and the clutch actuator control amount. Thus, the engine is started by controlling the clutch actuator so that the control amount of the clutch actuator becomes the target amount.

On the other hand, in the Patent Literature 2, a technology is disclosed, in which the clutch torque map is corrected based on the correction coefficient which is calculated based on the deviation between the estimated engine torque and the engine rotation acceleration for clutch control in a vehicle installed with an automated manual transmission (hereinafter referred to as "AMT"). Such correction is executed when the clutch becomes in half-clutch state caused when the vehicle is started or when the gear is being shifted. A hybrid drive device according to the preamble of claim 1 is known from EP 2 447 124 A2.

[Citation List]

[Patent Literature]

Patent Literature 1: JP2010-76678 A
Patent Literature 2: JP4394386 B2

[Summary of Invention]

[Technical Problem(s)]

However, the clutch performance characteristic varies depending on the individual clutches and also changes with time. Accordingly, the hybrid drive device according to the Patent Literature 1 has a drawback that the target clutch torque may be deviated from the actual clutch torque when the clutch actuator is controlled based on a fixed clutch torque map.

Thus, it is difficult to control the actual clutch torque to be the target clutch torque accurately and accordingly, it sometime happens that the starting time has been elongated due to insufficiency of the clutch torque at the time of starting of the engine. It also happens a connection shock upon clutch connection due to an excess clutch torque.

Further, in the technology disclosed in the Patent Literature 2, the estimated engine torque varies depending on various factors such as for example, atmospheric pressure, temperature, fuel state, ignition plug state, combustion state or engine friction torque state. Even further, the engine torque varies with time. Thus, the estimated engine torque and the actual engine torque are deviated from each other. Accordingly, the correction coefficient calculated based on the estimated engine torque is not accurate and therefore, the clutch torque map cannot be accurately corrected.

Still further, the technology disclosed in the Patent Literature 2 cannot be adapted to a hybrid vehicle which uses the planetary gear mechanism. This is because in the hybrid vehicle, the vehicle starts by the motor/generator and not started by the activation of the engine. Further, the vehicle does not exhibit half-clutch state upon gear shifting operation.

When the vehicle is changed from the driving by motor/generator, i.e., electrically driven running mode to split running mode in which the vehicle is running under the motor/generator and the engine driven running, the clutch exhibits the half-clutch state, however, when the engine is started, due to the unstable condition of the engine combustion, the engine torque is also unstable or unsteady and deviated largely. This cannot calculate the correction coefficient accurately which may lead to providing of an inaccurate clutch torque map.

The present invention was made in consideration with the above problems and the object of the invention is to provide a technology that can accurately correct the clutch torque map in a hybrid drive device having a clutch for connecting or disconnecting the output shaft of the engine and the input shaft for a planetary gear mechanism and a motor/generator rotating in association with the rotation of the input shaft.

[Solution to Problem(s)]

The invention associated with claim 1 to solve the above problems is characterized in that the hybrid drive device includes an engine which outputs a torque to an output shaft, an input shaft which is rotated in association with a rotation of a drive wheel, a clutch disposed between the output shaft and the input shaft for connecting or disconnecting the output shaft and the input shaft, a motor/generator which is rotated in association with a rotation of the input shaft, a target control amount calculating means for calculating a target control amount of an actuator which corresponds to a target clutch torque, based on a clutch torque map which indicates a relationship between a clutch torque generated by the clutch and a control amount corresponding to an operation amount of the actuator which drives the clutch, a clutch control means for controlling the actuator to be operated with the target control amount so that the clutch torque agrees to the target clutch torque, an estimated clutch torque calculating means for calculating an estimated clutch torque based on a torque which is generated by the motor/generator and a rotation acceleration of the input shaft when the clutch is in asynchronous state and a correcting means for correcting the clutch torque map based on the target clutch torque and the estimated clutch torque.

It is noted here that in the invention associated with claim 1, the hybrid drive device further includes a correction coefficient calculating means for calculating a correction coefficient which indicates a deviation between the target clutch torque and the estimated clutch torque. It is preferable for the correcting means to correct the clutch torque map based on the correction coefficient.

Further, in the invention of claim 1, the hybrid drive device is provided with a second correction coefficient calculating means which calculates a second correction coefficient for each clutch torque based on a reflecting ratio set corresponding to a distance from a predetermined point referencing the correction coefficient and the predetermined point on the clutch torque map and preferably the correcting means corrects the control amount of the actuator corresponding to the predetermined clutch torque based on the second correction coefficient of each predetermined clutch torque.

According to the invention associated with claim 2, in addition to the feature of claim 1, the estimated clutch torque calculating means calculates the estimated clutch torque under the clutch being in the asynchronous state, upon connecting the clutch which has been disconnected by rotating the motor/generator for starting the engine which has been stopped.

According to the invention associated with claim 3, in addition to the feature of claim 1, the estimated clutch torque calculating means calculates the estimated clutch torque under the clutch being in the asynchronous state, upon connecting the clutch which has been disconnected in order to generate braking force by friction of the engine under the vehicle being running only by the torque by the motor/generator.

According to the invention associated with claim 4, in addition to the feature of claim 1, the estimated clutch torque calculating means calculates the estimated clutch torque by operating the clutch to be in the asynchronous state, when the vehicle is running by the engine torque and the motor/generator is in generation operation.

According to the invention associated with claim 5, in addition to the feature of claim 4, the estimated clutch torque calculating means calculates the estimated clutch torque when a difference rotation speed of the clutch is less than a first rotation speed and equal to or more than a second rotation speed which is slower than the first rotation speed.

According to the invention associated with claim 6, in addition to the feature of any one of claims 1 through 5, the estimated clutch torque calculating means calculates the estimated clutch torque when an absolute value of the rotation acceleration of the input shaft is equal to or less than a predetermined value.

According to the invention associated with claim 7, in addition to the feature of any one of claims 1 through 6, the estimated clutch torque calculating means calculates the estimated clutch torque when an absolute value of the rotation acceleration of the motor/generator is equal to or less than a predetermined value.

[Advantageous effects of Invention]

According to the invention associated with claim 1, the estimated clutch torque calculating means calculates the estimated clutch torque based on a torque which is generated by the motor/generator and a rotation acceleration of the input shaft when the clutch is in asynchronous state and the correcting means corrects the clutch torque map based on the target clutch torque and the estimated clutch torque. Accordingly, the clutch torque can be corrected.

The torque generated by the motor/generator, which is different from the torque generated by the engine, can be accurately detected. Accordingly, the correction of the clutch torque can be accurately made based on the torque generated by the motor/generator, which can be accurately detected.

Further, it is not necessary to provide separately a torque detector for detecting a torque. The clutch torque can be corrected based on the torque generated by an existing motor/generator. Accordingly, the correction of the clutch torque map can be made by just adding a program, thereby providing a hybrid drive device which can make a correction of the clutch torque in an inexpensive way.

According to the invention of claim 2, the clutch torque calculating means calculates the estimated clutch torque under the clutch being in the asynchronous state, upon connecting the clutch which has been disconnected by rotating the motor/generator for starting the engine which has been stopped. According to this feature, since it is not necessary to re-start the engine only for the correction of the clutch torque map, fuel consumption therefor can be saved.

According to the invention of claim 3, the estimated clutch torque calculating means calculates the estimated clutch torque under the clutch being in the asynchronous state, upon connecting the clutch which has been disconnected in order to generate braking force by friction of the engine under the vehicle being running only by the torque by the motor/generator. According to this feature, the fuel is not consumed only for the correction of the clutch torque map, a fuel consumption therefor can be saved.

According to the invention associated with claim 4, the estimated clutch torque calculating means calculates the estimated clutch torque by operating the clutch to be in the asynchronous state, when the vehicle is running by the engine torque and the motor/generator is in electricity generation operation. According to the feature, it is not necessary to re-engage the clutch after disconnecting completely only for the purpose of correction of the clutch torque map. Therefore, even under the battery amount is short, the generation of electricity by the motor/generator is not interrupted to thereby prevent worsening of fuel consumption as minimum as possible. Further, insufficiency of required drive force by the torque generated by the motor/generator can be prevented. Further, since the correction of the clutch torque map is not limited to the vehicle starting and gear shifting which is conventionally executed, an accurate correction of the map can be surely executed.

According to the invention associated with claim 5, the estimated clutch torque calculating means calculates the estimated clutch torque when a difference rotation speed of the clutch is less than a first rotation speed and equal to or more than a second rotation speed which is slower than the first rotation speed. It is noted that if the difference rotation speed of the clutch is faster than the first rotation speed, the generation of electricity by the motor/generator would not be performed smoothly. On the other hand if the difference rotation speed of the clutch is less than the second rotation speed, accurate rotation acceleration of the input shaft cannot be detected. Thus, an accurate correction of the clutch torque map cannot be performed. When the difference rotation speed of the clutch is less than the first rotation speed and equal to or more than the second rotation speed, the estimated clutch torque can be calculated, the clutch torque map can be corrected accurately without influencing on the generation operation of the motor/generator.

According to the invention associated with claim 6, the estimated clutch torque calculating means calculates the estimated clutch torque when an absolute value of the rotation acceleration of the input shaft is equal to or less than a predetermined value. Accordingly, the estimated clutch torque is not calculated when the absolute value of the rotation acceleration of the input shaft which is in connection with the clutch is larger than the predetermined value and the rotation acceleration is not in stable state. Thus, the estimated clutch torque calculation under the unstable state of the rotation acceleration of the input shaft can be avoided and an accurate correction of the clutch torque map can be executed.

According to the invention associated with claim 7, the estimated clutch torque calculating means calculates the estimated clutch torque when an absolute value of the rotation acceleration of the motor/generator is equal to or less than a predetermined value. Therefore, the estimated clutch torque is not calculated when the absolute value of the rotation acceleration of the motor/generator becomes larger than the predetermined value due to a large vehicle speed change and the rotation acceleration of the motor/generator is not stable. Accordingly, the estimated clutch torque calculation under the unstable state of the rotation acceleration of the input shaft can be avoided and an accurate correction of the clutch torque map can be executed.

[Brief Explanation of Attached Drawings]

[Fig. 1] Fig. 1 is a skeleton view indicating the structure of a hybrid drive device according to a first embodiment of the invention;

[Fig. 2] Fig. 2 is a speed performance line of the planetary gear mechanism under electrically operated running mode and under hybrid running mode;

[Fig. 3] Fig. 3 is a map of indicating the relationship between the clutch stroke and the clutch torque; [Fig. 4] Fig. 4 is a view indicating a mapping data indicating the relationship between the distance from the learning point and the reflecting ratio;

[Fig. 5] Fig. 5 is a flowchart of engine start control which is a control program executed at the control portion shown in Fig. 1;

[Fig. 6] Fig. 6 is a flowchart of clutch torque control indicating a sub-routine of the engine start control program;

[Fig. 7] Fig. 7 is a flowchart of clutch torque map calculation indicating a sub-routine of the clutch torque control;

[Fig. 8] Fig. 8 is a flowchart of clutch torque correction ratio calculation indicating a sub-routine of the clutch torque calculation;

[Fig. 9] Fig. 9 is a flowchart of clutch torque correction ratio calculation indicating a sub-routine of the clutch torque calculation;

[Fig. 10] Fig. 10 is a flowchart of clutch torque correction coefficient calculation indicating a sub-routine of the clutch torque calculation;

[Fig. 11] Fig. 11 is a flowchart of a first engine starting process indicating a sub-routine of the engine start control;

[Fig. 12] Fig. 12 is a flowchart of a second engine starting process indicating the sub-routine of the engine start control;

[Fig. 13] Fig. 13 is a flowchart of a clutch torque map replacement control indicating the control program executed at the control portion shown in Fig. 1;

[Fig. 14] Fig. 14 is a flowchart of engine brake generation control indicating the control program executed at the control portion shown in Fig. 1;

[Fig. 15] Fig. 15 is a flowchart of split running clutch torque map calculation control indicating the control program executed at the control portion shown in Fig. 1; and

[Fig. 16] Fig. 16 is a skeleton view indicating the structure of the hybrid drive device according to a second embodiment of the invention.

[Embodiments for Implementing Invention]

(Structure of Hybrid Drive Device)

The embodiment (First embodiment) of the hybrid drive device 100 will be explained with reference to the attached drawings. It is noted here that the broken lines indicated in Fig. 1 indicate the information transmittal route for various information and the one-dot chain lines indicate the transmittal route for electricity. The hybrid vehicle (hereinafter referred to as just "vehicle") is equipped with the hybrid drive device 100.

The hybrid drive device 100 according to this embodiment includes an engine EG, a first motor/generator MG1, a second motor/generator MG2, a planetary gear mechanism 10, a clutch 20, a first inverter 31, a second inverter 32, a battery 33, an actuator 50 and a control portion 40. It is noted here that hereinafter the expression of "clutch being under engagement" means the state of clutch 20 from a disengaged state to a state that the clutch is in connected state.

The engine EG includes a gasoline engine or diesel engine using a fuel of hydrocarbon system such as gasoline or light gas and applies torque (rotational drive force) to the drive wheels Wl and Wr. The torque is outputted from the engine to an output shaft EG-1 based on the control signal from the control portion 40. An engine rotation speed sensor EG-2 is provided in the vicinity of the output shaft EG-1.

The engine rotation speed sensor EG-2 detects the engine rotation speed $\overline{\omega}e$ which corresponds to the rotation speed of the output shaft EG-1. The detected signal is outputted to the control portion 40. The engine EG is equipped with a water temperature sensor EG-3 which detects the temperature "te" of a coolant for cooling the engine EG and outputs the detected signal to the control portion 40. Further, the engine EG is equipped with a fuel injection device (not shown) for injecting fuel to the suction port and each cylinder. Further, when the engine EG is a gasoline type engine, ignition plug (not shown) is provided at each cylinder.

The clutch 20 is disposed between the output shaft EG-1 and an input shaft 51 of the planetary gear mechanism 10 and connects or disconnects the output shaft EG-1 and the input shaft 51 for electrically controlling a "clutch torque" therebetween. Any type clutch can be used as long as such control can be made. The "clutch torque" means a torque for power transmission between the output shaft EG-1 (flywheel 21) and the input shaft 51 (clutch disc 22). According to this embodiment, the clutch 20 is of dry-type, single plate, normally closed type cutch and includes the flywheel 21,a clutch disc 22, a clutch cover 23, a pressure plate 24 and a diaphragm spring 25.

The flywheel 21 is a disc-shaped plate having a predetermined mass. The flywheel 21 is connected to the output shaft EG-1 and rotates unitary therewith. The clutch disc 22 is of a disc plate shape and a friction material 22a is provided on the outer brim portion of the disc and faces to the flywheel 21 and is engageable with or detachable from the flywheel 21. The friction material 22a is a so-called clutch lining and is formed by a metal made aggregate and a synthetic resin made binder for connecting the aggregate. The clutch disc 22 is connected to the input shaft 51 and rotates unitary therewith.

The clutch cover 23 is formed by a cylindrical portion 23a connected to the outer brim portion of the flywheel 21 provided at the outer peripheral side of the clutch disc 22 and an annular plate shaped side wall 23b extending inward in a radial direction from the end portion of the cylindrical portion 23a opposite to the connecting portion with the flywheel 21. The pressure plate 24 is of annular shape and faces to the clutch disc 22 at the opposite side to the facing surface with the flywheel 21 and is engageable with or disengageable from the clutch disc 22.

The diaphragm spring 25 is a so-called dish spring and a diaphragm inclined in a thickness direction is formed. At the central portion of the diaphragm spring in a radial direction is in contact with the inner brim portion of a side peripheral wall 23b of the clutch cover 23 and outer brim portion of the diaphragm spring 25 is in contact with the pressure plate 24. The diaphragm spring 25 pressurizes the clutch disc 22 onto the flywheel 21 through the pressure plate 24. Under such pressurized condition, the friction material 22a of the clutch disc 22 is pressed by the flywheel 21 and the pressure plate 24 and the clutch disc 22 and the flywheel 21 are rotated together by the friction force generated between the friction material 22a and the flywheel 21 and the pressure plate 24 to thereby connect the output shaft EG-1 and the input shaft 51.

A temperature sensor 26 is provided within a housing (not shown) which accommodates the clutch 20. The temperature "Th" in the housing detected by the temperature sensor 26 is inputted to the control portion 40.

The actuator 50 varies the transmission torque of the clutch 20 by driving the clutch 20. The actuator 50 presses the inner brim portion of the diaphragm spring 25 or releases the pressurization thereon based on the instructions from the control portion 40. The actuator 50 includes electric type and hydraulic type. When the actuator 50 presses the inner brim portion of the diaphragm spring 25 towards the flywheel 21 side, the diaphragm spring 25 deforms and the outer brim portion thereof is deformed in a direction separating from the flywheel 21. Then the deformation of the diaphragm spring 25 gradually decreases the pressing force of the flywheel 21 and the pressure plate 24 to the clutch disc 22 and finally the transmission torque between the clutch disc 22 and the flywheel 21 and the pressure plate 24 is decreased to disconnect the output shaft EG-1 and the input shaft 51.

Thus, the control portion 40 randomly varies the transmission torque between the clutch disc 22 and the flywheel 21 and the pressure plate 24 by actuating the actuator 50.

A stroke sensor 52 is provided at the clutch 20 which detects the clutch stroke "St" which corresponds to the stroke of the actuator. This clutch stroke "St" is used for a judging of rotation transmission state by the clutch 20. The stroke sensor 52 is connected to the control portion 40 for communication therebetween and outputs the detected signal of the clutch stroke "St" to the control portion 40.

The first motor/generator MG-1 is operated as a motor for applying torque to the drive wheels Wl and Wr, and at the same time used as a generator which converts a kinetic energy of the vehicle to the electricity. The first motor/generator MG1 is formed by a first stator St1 fixed to a case (not shown) and a first rotor Ro1 rotatably provided at the inner peripheral side of the first stator St1. It is noted that a rotation speed sensor MG1-1 is provided in the vicinity of the first rotor Ro1 which detects the rotation speed $\overline{\omega}$MG1r of the first motor/generator MG1 (first rotor Ro1) and outputs the detected signal to the control portion 40.

The first inverter 31 is electrically connected to the first stator St1 and the battery 33. The first inverter 31 is connected to the control portion 40 and establishes communication therebetween. The first inverter 31 converts the DC current supplied from the battery 33 into the AC current by increasing the voltage based on the control signal from the control portion 40 and the converted AC current is supplied to the first stator St1 to generate the torque by the first motor/generator MG1 thereby the first motor/generator MG1 being used as a motor. The first inverter 31 controls the first motor/generator MG1 to function as a generator based on the control signal from the control portion 40 and the AC current generated at the first motor/generator MG1 is converted into the DC current and at the same time the voltage is decreased, thereby charging the battery 33.

The second motor/generator MG2 is operated as a motor for applying torque to the drive wheels Wl and Wr, and at the same time used as a generator which converts a kinetic energy of the vehicle to the electricity. The second motor/generator MG2 is formed by a second stator St2 fixed to a case (not shown) and a second rotor Ro2 rotatably provided at the inner peripheral side of the second stator St2.

The second inverter 32 is electrically connected to the second stator St2 and the battery 33. The second inverter 32 is connected to the control portion 40 and establishes communication therebetween. The second inverter 32 converts the DC current supplied from the battery 33 into the AC current by increasing the voltage based on the control signal from the control portion 40 and the converted AC current is supplied to the second stator St2 to generate the torque by the second motor/generator MG2 thereby the second motor/generator MG2 being used as a motor. The second inverter 32 controls the second motor/generator MG2 to function as a generator based on the control signal from the control portion 40 and the AC current generated at the second motor/generator MG2 is converted into the DC current and at the same time the voltage is decreased, thereby charging the battery 33.

The planetary gear mechanism 10 divides the torque of the engine EG into the first motor/generator MG1 side and the differential mechanism DF side, which will be explained later and is formed by a sun gear 11, a planetary gear 12, a carrier 13 and a ring gear 14. The sun gear 11 is connected to the first rotor Ro1 for unitary rotation therewith. The planetary gear 12 is provided at the periphery of the sun gear 11 with a plurality of numbers and engages with the sun gear 11. The carrier 13 rotatably (rotation) supports the plurality of planetary gears 12. The carrier 13 is connected to the input shaft 51 for unitary rotation therewith. The ring gear 14 is of ring shaped and is formed with an inner gear 14a at the inner peripheral surface thereof. An output gear 14b is provided at the outer peripheral surface of the ring gear 14. The inner gear 14a is in engagement with the plurality of planetary gears 12.

A reduction gear 60 is formed by a first gear 61, a second gear 62 and a connecting shaft 63. The first gear 61 is in engagement with the output gear 14b of the ring gear 14 and at the same time in engagement with an output gear 71 which unitary rotates with the second rotor Ro2. The second gear 62 is in connection with the first gear 61 through the connecting shaft 63 and rotates unitary with the first gear 61. It is noted that the second gear 62 has a diameter smaller than the diameter of the first gear 61 and the number of teeth of the second gear 62 is smaller than that of the first gear 61. The second gear 62 is in engagement with the input gear 72.

The differential mechanism DF delivers the torque transmitted to the input gear 72 to drive shafts 75 and 76 which are respectively connected to the drive wheels Wl and Wr. As explained above, the input shaft 51 is rotatably connected to the drive wheels Wl and Wr through the planetary gear mechanism 10, reduction gear 60, differential mechanism DF and drive shafts 75 and 76. It is noted that no second clutch different form the clutch 20 exists between the engine EG and the clutch 20. Further, it is noted that no second clutch different form the clutch 20 exists between the clutch 20 and the drive wheels Wl and Wr.

The control portion 40 generally controls the hybrid drive device 100 and includes an ECU. The ECU is equipped with a memory portion formed by an input/output interface, CPU, RAM, ROM and non-volatile memory respectively connected with one another through bus lines. The CPU executes the program corresponding to the flowchart illustrated in Figs. 5 through 15. The RAM temporally memorizes variables necessary for executing the program. The memory portion memorizes the detected values from the various sensors and also memorizes the program and mapping data illustrated in Figs. 3 and 4. The control portion 40 may be formed by one single ECU or may be formed by a plurality of ECUs.

The control portion 40 obtains the information on acceleration opening degree Ac which means the absolute value of the operating amount of an acceleration pedal 81 detected by an acceleration sensor 82. The control portion 40 further obtains the vehicle wheel speeds Vr and Vl from the vehicle wheel sensors 85 and 86 which detect rotation speed of each of the vehicle wheels Wl and Wr (not necessarily the drive wheels) and then the vehicle speed V can be calculated based on the obtained vehicle wheel speed Vr and Vl. The control portion 40 calculates the "required drive force" based on the acceleration opening degree Ac and the vehicle speed V.

The control portion 40 obtains the information on brake opening degree Bk which means the absolute value of the operating amount of a brake pedal 83 detected by a brake sensor 84. The control portion 40 calculates the "required braking force" based on the brake opening degree Bk. The control portion 40 calculates the input shaft rotation speed $\overline{\omega}$I which corresponds to the rotation speed of the input shaft 51 (carrier 13) based on the rotation speed $\overline{\omega}$MG1r of the first motor/generator MG1 inputted from the rotation speed sensor MG1-1, the rotation speed $\overline{\omega}$MG2r of the second motor/generator MG2 (calculated from the vehicle speed V) and the number of teeth between the sun gear 11 and the inner gear 14a.

(Explanation of Electric Running Mode and Split Running Mode)

Next, using the speed line diagram illustrated in Fig. 2, the "Electric running mode" and the "Split running mode" will be explained. The vehicle is either in electric running mode or split running mode and both modes are switchable during vehicle in running state. The "Electric running mode" means the mode in which the vehicle is driven by the torque of at least one of the first and the second motor/generators MG1 and MG2, whereas the "split running mode" means the mode in which the vehicle is driven by the torque of at least one of the first and the second motor/generators MG1 and MG2 and the torque of the engine EG and the other of the first and the second motor/generators MG1 and MG2 generates electricity (under generation operation).

As shown in the diagram of Fig. 2, the vertical axis indicates the rotation speed of each rotation element. The area upper than the value zero in Fig. 2 indicates the area where the rotation is in a positive direction and the arear lower than the value zero indicates the area where the rotation is in a negative direction. In Fig. 2, the symbol "s" indicates the rotation speed of the sun gear 11, "ca" indicates the rotation speed of the carrier 13 and "r" indicates the rotation speed of the ring gear 14. In other words, the symbol "s" indicates the rotation speed of the first motor/generator MG1, "ca" indicates the rotation speed of the input shaft 51 and "r" indicates the rotation speed proportion to the rotation speed of the second motor/generator MG2 and the rotation speed of the drive wheels Wl and Wr (vehicle speed).

When the clutch 20 is completely engaged, the rotation speed of "ca" becomes the same speed as the rotation speed of the output shaft EG-1 of the engine EG. Assuming that the distance between the vertical lines "s" and "ca" being one (1), the distance between the vertical lines "ca" and "r" becomes the gear ratio "$\lambda$" of the planetary gear mechanism 10 (ratio of the number of teeth between the sun gear 11 and the inner gear 14a: the number of teeth of sun gear 11 / the number of teeth of inner gear 14a). As explained, the first motor/generator MG1 (first rotor Ro1), the input shaft 51 and the second motor/generator MG2 are rotated mutually associated with one another.

Under the battery being in sufficiently charged state and the required drive force is sufficiently obtained from the torque from the first and the second motor/generators MG1 and MG2 only, the vehicle is driven under the "electric running mode".

Under the "electric running mode", when the vehicle is driven by only the torque from the second motor/generator MG2, the control portion 40 controls the actuator 50 to disconnect the clutch 20. Thus the engine EG and the input shaft 51 are disconnected. The control portion 40 sends the control signal to the second inverter 32 to drive the second motor/generator MG2 to generate the "required drive force". Under this state, as shown by the solid line in Fig. 2, the second motor/generator MG2 rotates in the positive direction. The engine EG is stopped due to the disconnection with the input shaft 51 (the engine rotation speed me is zero) (the state of point "1" in Fig. 2).

When the vehicle is driven only by the torque of the second motor/generator MG2, the clutch 20 is in disconnected state and therefore, the input shaft 51 is freely rotatable. (State of point "5" in Fig. 2). Therefore, the torque from the second motor/generator MG2 transmitted to the ring gear 14 is idly rotated within the planetary gear mechanism 10 due to the free rotation of the input shaft 51. Thus, the first motor/generator MG1 does not rotate (the rotation speed $\overline{\omega}$MG1r is zero) (State of point "6" in Fig. 2).

Since the first motor/generator MG1 does not rotate, any rotation loss derived from the rotation of the first motor/generator MG1 (inertia torque of the first rotor Ro1) can be prevented to save electric energy (to improve electricity consumption of the vehicle).

When the vehicle is running under the "electric running mode" and required drive force is not sufficient by the torque of the second motor/generator MG2 only, the control portion 40 outputs the control signal to the actuator 50 to engage the clutch 20 for establishing connection between the output shaft EG-1 and the input shaft 51. At the same time the control portion 40 outputs the control signal to the first and the second inverters 31 and 32 to drive the first and the second motor/generators MG1 and MG2 to obtain the required drive force for the vehicle. Under this state, as shown by the broken line in Fig. 2, the first motor/generator MG1 is rotated in the negative direction (The state of point "2" in Fig. 2) and the second motor/generator MG2 is rotated in the positive direction and the engine EG is stopped. (The state of point "3" in Fig. 2)

Under this state, the friction torque of the engine EG which is a negative torque functions as a reaction force receiver for supporting the carrier 13. Therefore, the maximum torque that the first motor/generator MG1 can output is limited to the torque that the rotation torque transmitted to the input shaft 51 by the first motor/generator MG1 is equal to or less than the friction torque of the engine EG.

When the required drive force is not sufficient only by the torque generated by the first and the second motor/generators MG1 and MG2 or when the battery is not sufficiently charged, the vehicle is driven under the "split running mode".

Under the "split running mode", the control portion 40 controls the actuator 50 to actuate the clutch 20 to be in engagement state and at the same time the control portion 40 controls the engine EG to generate a predetermined torque. Thus, the engine EG and the input shaft 51 are connected and the engine torque is inputted to the carrier 13 and the engine torque transmitted to the carrier 13 is divided in two and transmitted to the sun gear 11 and the ring gear 14, respectively. Thus, the engine torque is delivered to the first motor/generator MG1 and the drive wheels Wr and Wl.

Under the "split running mode", the engine EG is maintained to a highly efficient state (high efficient state in fuel consumption ratio). Under this state, as shown by the one-dot chain line in Fig. 2, the first motor/generator MG1 receives the divided torque from the engine EG and rotates in the positive direction (state of point "4" in Fig. 2) and generates the electricity. Thus, the first motor/generator MG1 outputs a motor/generator torque in a negative direction to the sun gear 11. In other words, the first motor/generator MG1 functions as a reaction force receiver which supports the reaction force of engine torque Te. Accordingly, the torque of the engine EG is distributed to the ring gear 14 and eventually to the drive wheels Wl and Wr. The second moto/generator MG2 is driven by the electric current which the first motor/generator MG1 generates and the electric current which is supplied from the battery 33 to drive the drive wheels Wl and Wr.

It is noted here that when the control portion 40 judges that the acceleration pedal 81 has been released (acceleration opening degree "Ac" is zero) or judges that the brake pedal 83 has been depressed (the brake opening degree Bk is larger than zero), a regeneration braking operation is executed. Under the "regeneration braking", the control portion 40 generally controls the actuator 50 to actuate the clutch 20 to be in disconnected state. Then the control portion 40 outputs the control signal to the second inverter 32 and the regeneration braking force is generated at the second motor/generator MG2.

At this timing, the second motor/generator MG2 generates the rotation torque in a negative direction and the current generated at the second motor/generator MG2 is charged to the battery 33. Accordingly, the regeneration braking is executed when the clutch 20 is disconnected and the vehicle kinetic energy is not wastefully consumed due to the friction torque of the engine EG.

It is noted that under the battery 33 being fully charged state, when the so-called engine brake is used in addition to the friction brake for generating the braking force, the control portion 40 controls the actuator 50 to actuate the clutch 20 to be in engagement state thereby rotating the engine EG to utilize the engine friction toque for deceleration of the vehicle. In this case, the second motor/generator MG2 is used as a generator. The electricity generated at the second motor/generator MG2 is supplied to the first motor/generator MG1 and the first motor/generator MG1 controls the input shaft 51 to generate a predetermined rotation speed which can generate engine brake.

(Explanation of clutch torque learning correction method)

Hereinafter, the relationship between the "clutch torque" associated with the clutch control and the "clutch stroke" and the learning correction of the relationship according to the embodiment will be explained with reference to Figs. 3 and 4. In Fig. 3, the solid line indicates the clutch torque map which indicates the relationship between the target "clutch torque" and "clutch stroke". This clutch torque map is memorized in the memory portion of the control portion 40.

The clutch 20 according to the embodiment is completely disconnected at the stand-by position of the clutch stroke (zero stroke) and accordingly, the clutch torque is zero. As the clutch stroke increases, the clutch torque also increases and at the maximum of the clutch stroke, the clutch is completely engaged.

The clutch torque map exhibits a plurality of map points (coordinate) defined by a plurality of predetermined clutch torques T (i) (wherein "i" indicates an integer number) and a plurality of clutch strokes Y (i) which is calculated corresponding to the plurality of clutch torques T (i) and the map is formed by first-order interpolation between the adjacent map points. The value of the predetermined clutch torques T (i) is set such that the larger the value (i), the smaller the clutch torque becomes.

According to the embodiment, when learning, the clutch strokes Y (i) corresponding to all of the predetermined clutch torques T (i) are corrected and the clutch torque map itself is replaced (corrected).

First, a learning aspect for the clutch torque map will be explained. In this learning, by referencing the target clutch torque Tct to the clutch torque map shown in Fig. 3, a target clutch stroke Sr is calculated. Then by controlling the actuator 50 to obtain the target clutch stroke Sr thereby actuating the clutch 20 to be in a half-clutch state (asynchronous state or incomplete engagement state). Under this state, an estimated clutch torque Tc_tmp which is presumed to be actually generated relative to the target clutch torque Tct is calculated by the following formula (1):

$$Tc_tmp = | Tca - Ii \times d\omega i / dt | \ldots (1)$$

Tc_tmp: estimated clutch torque;
Tca: torque inputted to the carrier 13;
Ii: rotation inertia on the input shaft;
dωi / dt: the input shaft rotational acceleration;

The rotation inertial on the input shaft includes rotation inertia of clutch disc 22, input shaft 51, carrier 13 and planetary gear 12. The Input shaft rotational acceleration dωi / dt is computed by time-differentiating the input shaft rotational speed ωi.

Further, the torque inputted to the carrier 13 can be obtained by the following formula:

$$Tca = \eta \times ((1 + \lambda) / \lambda)) \times Ts \ldots (10)$$

Tca = torque inputted to the carrier 13;
η = transmission efficiency from the sun gear 11 to the carrier 13;
λ = gear ratio of the planetary gear mechanism 10 (ratio of the number of teeth between the sun gear 11 and the inner gear 14a) (the number of teeth of the sun gear 11/the number of teeth of the inner gear 14a);
Ts = torque transmitted to the sun gear 11.

The torque Ts transmitted to the sun gear 11 is calculated by the following formula (11):

$$Ts = TMG1 - Is \times d\omega s / dt \ldots (11)$$

Ts = torque transmitted to the sun gear 11;
TMG1: torque generated by the first motor/generator MG1;
Is: rotation inertia on the sun gear 11 axis (sun gear 11, shaft connecting the sun gear 11 and the first rotor Ro1 and the rotation inertia of the first rotor Ro1 are included)
$d\omega s / dt$: rotation acceleration of the sun gear 11 (rotation acceleration of the first rotor Ro1).

The torque TMG1 generated by the first motor generator MG1 is detected by the current which the first inverter 31 supplies with the first motor generator MG1.

Next, the estimated clutch stroke Sc and the target clutch stroke Sr are obtained by referencing the estimated clutch torque Tc_tmp and the target clutch torque Tct to the clutch torque map shown in Fig. 3. Further, the ratio of the estimated clutch stroke Sc and the target clutch stroke Sr can be obtained by the following formula (2) as the clutch correction ratio Kh (first correction coefficient):

$$Kh = Sr / Sc \; ... \; (2)$$

Kh: clutch torque correction ratio
Sr: target clutch stroke
Sc: estimated clutch stroke

Next, for each predetermined clutch torque T (i), the reflecting ratio N for reflecting the clutch torque correction ratio Kh is calculated from the relationship shown in Fig. 4. Fig. 4 indicates the relationship between the distance of each predetermined clutch torque T (i) from the learning points of the clutch torque Tr (the magnitude of deviation) |X(i)| and the reflecting ratio N(i). This relation is calculated by using the maximum reflecting ratio Nt, the minimum reflecting ratio Nb and the reflecting distance Xd by the following formula (3):

$$N(i) = DIV \cdot |X(i)| + Nt \; (|X(i)| < Xd) \quad N(i) = Nb \; (|X(i)| \geqq Xd) \; ... \; (3)$$

$$DIV = -(Nt - Nb) / Xd$$

| X (i) |: absolute value of the distance of each predetermined clutch torque T (i) from the learning points of the clutch torque Tr;
N (i): reflecting ratio;
DIV: inclination of the straight line shown by the solid line in Fig. 4;
Nt: maximum reflecting ratio Nt;
Nb: minimum reflecting ratio;
Xd: reflecting distance.

The reflecting ratio N(i) for the predetermined clutch torque T(i) becomes maximum reflecting ratio Nt when the reflecting ratio N(i) agrees with the learning point of the clutch torque Tr and decreases in accordance with the increase of the distance |X(i)| within the area to the reflecting distance Xd. The reflecting ratio N (i) becomes a constant value of the minimum reflecting ratio Nb when the distance |X(i)| exceeds the predetermined value Xd. It is noted that the maximum reflecting ratio Nt is set to be the value less than one (1.0) in order to avoid erroneous learning or a sudden change. It is further noted that the minimum reflecting ratio Nb is set to be the value larger than zero (0) to have a certain fixed reflecting ratio in order to easily secure a monotone increasing of the clutch torque map and at the same time to enhance the overall convergence of the clutch torque map.

By this reflecting ratio N (i), a clutch torque correction coefficient Kc (i), as the second correction coefficient, for obtaining the clutch stroke Yb (i) which is to be replaced with a new clutch stroke (Y (i)) corresponding to each of the clutch torque T (i) is obtained by using the following formula (4).

$$Kc(i) = 1 + (Kh - 1) \cdot N(i) \; ... \; (4)$$

Kc(i): clutch torque correction coefficient
Kh: clutch torque correction ratio
N (i): reflecting ratio.

The clutch stroke Yb (i) can be obtained by multiplying the current clutch stroke Y (i) by the corresponding clutch torque correction coefficient Kc (i) in each of the predetermined clutch torque T (i).

Next, in order to limit the inclination of the clutch torque map formed between the adjacent predetermined clutch torques T (i) and T (I - 1), the deviation of the clutch strokes Yb (i) and Yb (i - 1) corresponding to the ascending order and a minimum inclination value YG (i - 1) which is preset in advance between the clutch torques T (i) and T (i - 1) are compared. When the deviation of the clutch strokes Yb (i) and Yb (i - 1) is smaller than the minimum inclination value YG (i - 1), the value of the clutch stroke Yb (i) is replaced by a value corresponding to the minimum inclination value YG (i - 1) and when the deviation of the clutch strokes Yb (i) and Y b(i - 1) is larger than the minimum inclination value YG (i - 1), the value of the clutch stroke Yb (i) is kept to the clutch stroke Yb (i) as is. Thus calculated clutch stoke Yb (i) is, under the clutch complete engagement state or the complete non-engagement state (state which would not influence on the clutch control), renewed as a new clutch stroke Y (i) and the clutch torque map is replaced.

By referencing the estimated clutch torque Tc_tmp and the target clutch torque Tct to the replaced clutch torque map, the estimated clutch stroke Sc and the target clutch stroke Sr can be obtained and then the clutch torque correction ratio Kh is calculated thereby. As explained, by repeating the replacement of the clutch torque map, the clutch torque map eventually converses in which the target clutch torque Tct agrees with the estimated clutch torque Tc_tmp which is an estimated value of clutch torque actually generated in the clutch 20 (the one-dot chain line in Fig. 3).

(Engine Start Control)

The engine start control will be explained hereinafter with reference to the flowchart of Fig. 5. In this embodiment, upon starting the engine EG, the clutch torque map to be replaced as explained above is calculated. This engine start control is executed every time the engine EG starting condition is established.

When the engine start control begins, at the step S66, the control portion 40 estimates the oil temperature of the engine EG from the water temperature "te" of the coolant of the engine EG detected by the water temperature sensor EG-3. The control portion 40 then calculates the friction torque Te of the engine EG based on the oil temperature of the engine EG. After the step S66, the program goes to the step S67.

At the step S67, the control portion 40 calculates the target clutch torque Tct which is the target transmitting torque of the clutch 20 being under engagement. More specifically, the control portion 40 calculates the target clutch torque Tct by substituting the values of friction torque Te of the engine EG, engine inertia Ie, target input shaft rotation speed $\overline{\omega}$it_0 at the start of engagement and a target clutch synchronizing time Tst into the following formula (5). It is noted that according to this embodiment, the current input shaft rotation speed $\overline{\omega}$ir is set as the target input shaft rotation speed $\overline{\omega}$it_0 at the start of engagement.

$$Tct = Te + Ie \cdot \omega it_0/Tst \quad ... (5)$$

Tct: target clutch torque:

Te: friction torque of the engine EG:

Ie: engine inertia:

unit_0: target input shaft rotation speed $\overline{\omega}$it_0 (current input shaft rotation speed $\overline{\omega}$ir):

Tst: target clutch synchronizing time.

The engine inertia Ie is a moment of inertia of the rotation member of the engine EG and the rotation member of the engine EG includes a crank shaft, con rod, piston, output shaft EG-1, flywheel 21, clutch cover 23, pressure plate 24 and diaphragm spring 25. The value of the engine inertia Ie is predetermined in advance.

The target clutch synchronizing time Tst is the target time period for the engagement of the clutch 20 and the time period from the start of the engagement to the time the synchronization with the input shaft 51 is completed. This target clutch synchronizing time Tst is predetermined in advance considering occurrence of any possible engagement shocks.

By using the formula (5) above, the target clutch torque Tct is calculated so that the engine rotation speed becomes the target input shaft rotation speed ωit_0 at the start of engagement after the target clutch synchronizing time Tst passed from the start of the engagement of the clutch 20. After the process of the step S67 finished, the program goes to the step S68.

At the step S68, the control portion 40 executes the cutch torque control operation. More specifically, the clutch torque control which is the sub-routine of the step S68 shown in Fig. 6 will be explained with reference to the flowchart thereof.

When the clutch torque control operation begins as shown in Fig. 6, at the step S102, the control portion 40 calculates the clutch torque map and more specifically, the clutch torque map calculation which is the sub-routine of the step S102 shown in Fig. 7 will be explained with reference to the flowchart thereof.

When the clutch torque map calculation begins as shown in Fig.7, at the step S201, the control portion 40 judges whether the "learning finishing flag" is OFF or not and if judged to be OFF (S201; YES), the program goes to the step S202 and judged to be ON (S201; NO), the clutch torque map calculation is finished and the program goes to the step S103 of Fig. 6. The "learning finishing flag" is set to be ON when the clutch torque correction coefficient in which the clutch torque map is not yet replaced and is set to be OFF in any other timing.

At the step S202, the control portion 40 calculates the clutch torque correction ratio. More specifically, the flowchart of clutch torque correction ratio calculation shown in Figs. 8 and 9 as the sub-routine of the process at the step S202 will be explained hereinafter.

As shown in Figs. 8 and 9, when the clutch torque correction ratio calculation starts, the control portion 40 judges whether the learning condition flag is ON or not and when judged to be ON (S301; YES), the program goes to the step S302 and when judged to be OFF (S301; NO), the program goes to the step S303.

At the step S302, the control portion 40 increments the time counter "i" to one (1) from zero and advances the program to the step S311. It is noted that the time counter "i" indicates the number of calculation times which satisfied the learning condition consecutively. The number of calculation times (time counter "i") multiplying by the number of calculation cycles corresponds to the time that consecutively established the learning condition.

At the step S303, the control portion 40 resets the time counter to zero (0) and advances the program to the step S311.

At the step S311, the control portion 40 calculates the input shaft rotation acceleration $d\bar{\omega}i/dt$ by differentiating the input shaft rotation speed $\bar{\omega}i$ by time. After the completion of the process of the step S311, the program goes to the step S312.

At the step S312, the control portion 40 judges whether input shaft rotation acceleration $d\bar{\omega}i/dt$ is stable or not and if judged to be stable (S312; YES), the program goes to the step S313 and if judged to be instable (S312; NO), the program goes to the step S334. It is noted here that when the input shaft rotation acceleration absolute value of $d\bar{\omega}i/dt$ is in the vicinity of zero where the value is equal to or less than the predetermined value, the input shaft rotation acceleration $d\bar{\omega}i/dt$ is judged to be in a stable condition.

At the step S313, the control portion 40 calculates the sun gear rotation acceleration $\bar{\omega}s/dt$ by differentiating the sun gear rotation speed $\bar{\omega}s$ by time. It is noted that the sun gear rotation speed $\bar{\omega}s$ which is the rotation speed of the sun gear 11 is the same as the rotation speed $\bar{\omega}MG1r$ of the first motor/generator MG1 and is detected by the rotation speed sensor MG1-1. After the completion of the process of the step S313, the program goes to the step S314.

At the step S314, the control portion 40 judges whether the sun gear rotation acceleration $\bar{\omega}s/dt$ is stable or not and if judged to be stable (S314; YES), the program goes to the step S327 and if judged to be instable (S314; NO), the program goes to the step S334. It is noted here that when the sun gear rotation acceleration absolute value of $\bar{\omega}s/dt$ is in the vicinity of zero where the value is equal to or less than the predetermined value, the sun gear rotation acceleration $\bar{\omega}s/dt$ is judged to be in a stable condition.

At the step S327, the control portion 40 judges whether the clutch 20 is in synchronization or not and if judged to be not in synchronization (S327; YES), the program goes to the step S328 and if judged to be in synchronization (S327; NO), the program goes to the step S334. It is judged that the clutch 20 is not in synchronization if the engine rotation speed $\bar{\omega}e$ is not matched with the input shaft rotation speed $\bar{\omega}i$.

At the step S328, the control portion 40 sets the learning condition flag ON and advances the program to the step S329.

At the step S329, the control portion 40 calculates the target clutch stroke Sr_tmp which corresponds to this time routine target clutch torque Tct based on the current clutch torque map. Then the integrated value Sr of the target clutch stroke until the last time routine is renewed to a newly integrated value Sr by adding the above target clutch stroke Sr_tmp. The value obtained by dividing the integrated value Sr of the target clutch stroke by the number of calculation times accords as the clutch stroke corresponding to the average value of the target clutch torque. After the process of the step S329 ends, the program goes to the step S330.

At the step S330, the control portion 40 obtains this time routine estimated clutch torque Tct_tmp by the above formula (1) and then calculates the corresponding estimated clutch stroke Sc_tmp based on the current clutch torque map. Then the integrated value Sc of the estimated clutch stroke until the last time routine is renewed to a newly integrated value Sc by adding the above estimated clutch stroke Sc_tmp. The value obtained by dividing the integrated value Sc of the estimated clutch stroke by the number of calculation times accords as the clutch stroke corresponding to the average value of the estimated clutch torque. After the process of the step S330 ends, the program goes to the step S331.

At the step S331, the control portion 40 judges whether or not the satisfaction of the learning condition continues for a predetermined time or more and if judged that the satisfaction of the learning condition continues for the predetermined time or more (S331; YES), the program goes to the step S332 and if judged to be not continued (S331; NO), the program of clutch torque correction ratio calculation ends and the program goes to the step S203 as shown in Fig. 7. Explaining more specifically, when the time counter "i" is judged to be the predetermined value Ic or more, the satisfaction of the learning condition is judged to have continued for the predetermined time or more.

At the step S332, the control portion 40 sets the learning established flag ON and advances the program to the step S333.

At the step S333, the control portion 40 calculates the ratio between the estimated clutch stroke integrated value Sc and the target clutch stroke integrated value Sr, as the clutch torque correction ratio Kh using the formula (2) above. After the process of the step S333 completed, the clutch torque correction ratio calculation is completed and the program goes to the step S203 as shown in Fig. 7.

At the step S334, the control portion 40 sets the learning established flag OFF and resets the estimated clutch stroke integrated value Sc and the target clutch stroke integrated value Sr to zero (0). After the process of the step S334 completed, the clutch torque correction ratio calculation is completed and the program goes to the step S203 as shown in Fig. 7.

Accordingly, at the sub-routine in the step S202, the clutch torque correction ratio Kh is calculated when the satisfaction of the learning condition stably continues for the predetermined time or more as judged that the learning has been established and in the other cases where the satisfaction does not continue for the predetermined time, the time counter "i" and the integrated values Sc and Sr are renewed.

Next, returning to the flowchart of Fig. 7, at the step S203, when the control portion 40 judged that the learning established flag is ON (S203; YES), the program goes to the step S204 and when the control portion 40 judged the learning established flag is OFF (S203; NO), the clutch torque calculation is finished and the program goes to the step S103 of Fig. 6.

At the step S204, the control portion 40 executes the clutch torque correction coefficient calculation. More specifically, the explanation thereof will be explained using the flowchart of the clutch torque correction coefficient calculation which is the sub-routine of the step S204 in Fig. 10.

When the clutch torque correction coefficient calculation begins, at the step 401, the control portion 40 initializes the map point counter "j" by setting to one (1). The map point counter "j" is a coefficient for calculating the clutch torque correction coefficient Kc (j) ("j" is an Integral number) in series which corresponds to the overall predetermined clutch torques T(j). After the process of the step S401, the program goes to the step S402.

At the step S402, the control portion 40 judges whether the map point counter j" is equal to or less than a predetermined value Jc or not and if judged that the map point counter "j" is equal to or less than the predetermined value Jc (S402; YES), the program goes to the step S403 and if judged that the map point counter "j" is more than the predetermined value Jc (S402; NO), the clutch torque correction coefficient calculation ends and further the clutch torque map calculation in Fig. 7 ends and the program goes to the step S103 of Fig. 6. The predetermined value Jc is the value of the predetermined clutch torque T (j) subtracted by one (1). This is because the correction of the clutch stroke Y (0) relative to the clutch torque T (0) at the zero point is not made. At the beginning of process at the step S402, the map point counter "j" begins with one (1), the map point counter "j" is judged to be equal to or less than the predetermined value Jc. As will be explained later, the clutch stroke Yb (j) corresponding to all of the predetermined clutch torques T (j) is calculated, the map point counter "j" is judged to be larger than the predetermined value Jc (S402; NO).

At the step S403, the control portion 40 calculates the distance X (j) of each of the predetermined clutch torques T (j) from the learning point. The clutch torque at the learning point is an average value of each target clutch torque Tct upon calculation of the target clutch stroke integrated value Sr. In other words, the clutch torque at the learning point is obtained by dividing the target clutch torque integrated value which has been calculated until the learning is established by the number of calculation times (Ic). After the process of the step S403, the program goes to the step S404.

At the step S404, when the control portion 40 judges that the distance X (j) is smaller than the reflecting distance Xd, the control portion 40 advances the program to the step S405 and if the control portion 40 judges that the distance X (j) is equal to or more than the reflecting distance Xd, the program goes to the step S406.

At the step S405 or S406, the control portion 40 calculates the reflecting ratio N (j) based on the formula (3) above and advances the program to the step S407.

At the step S407, the control portion 40 calculates the clutch torque correction coefficient Kc (j) based on the formula (4) above and advances the program to the step S408.

At the step S408, the control portion 40 calculates the clutch stroke Yb (j) by multiplying the clutch stroke Y (j) at the current clutch torque map by the above obtained clutch torque correction coefficient Kc (j) and advances the program to the step S409.

At the step S409, the control portion 40 checks the monotone increasing tendency. Specifically, when the control portion 40 judges that the deviation between the clutch stroke Yb (j) corresponding to the predetermined clutch torque T (j) and the clutch stroke Yb (j - 1) corresponding to the adjacent predetermined clutch torque T (j - 1) is larger than a predetermined minimum inclination value YG (i - 1) therebetween, which is predetermined in advance (step S409; YES), the control portion 40 advances the program to the step S411 and if the deviation is equal to or less than the predetermined minimum inclination value YG (i - 1) (step S409; NO), the control portion 40 advances the program to the step S410.

At the step S410, the control portion 40 replaces the value of the clutch stroke Yb (j - 1) added by the minimum inclination value YG (i -1) as the clutch stroke Yb (j) and advances the program to the step S411.

At the step S411, the control portion 40 returns the program to the step S402 by incrementing the map point counter "j" by one (1).

As explained, in the clutch torque correction coefficient calculation, the clutch stroke Yb (j) is calculated which is replaced as a new clutch stroke Y (j) corresponding to each predetermined clutch torque T (j).

At the step S103 in Fig. 6, the control portion 40 calculates the target clutch stroke Sr relative to the target clutch torque Tct based on the clutch torque map of then memorized. After the process of the step S103, the program goes to the step S104.

At the step S104, the control portion 40 executes the feed-back control so that the detected clutch stroke St agrees with the calculated target clutch stroke Sr. After the process of the step S104, clutch torque control ends and the program goes to the step S69 of Fig. 5.

At the step S69 in Fig. 5, the control portion 40 renews the target input shaft rotation speed $\overline{\omega}$it under the clutch 20 being under engagement by substituting the values of the target input shaft rotation speed $\overline{\omega}$it_0 at the start of engagement, the target clutch synchronizing time Tst, the time "t" elapsed from the start of the engagement of the clutch 20, and current engine rotation speed $\overline{\omega}$e into the following formula (6). It is noted that according to this embodiment, the input shaft rotation speed $\overline{\omega}$ir at the start of engagement is set as the target input shaft rotation speed $\overline{\omega}$it_0 at the start of engagement.

$$\omega it = -\omega it_0 / Tst \cdot t + \omega e + \omega it_0 \; ... \; (6)$$

wit :target input shaft rotation speed under the clutch 20 being under engagement:

unit_0: target input shaft rotation speed at the start of engagement (input shaft rotation speed at the start of engagement):

Tst: target clutch synchronizing time:

t: elapsed time from the start of the engagement of the clutch 20:

use: engine rotation speed.

By using the formula (6) above, the target input shaft rotation speed ωit after renewal so that the clutch 20 is synchronized (state where the rotation difference is zero between the output shaft EG-1 and the input shaft 51) after the target clutch synchronizing time Tst elapsed from the start of the clutch engagement. After the process of the step S69, the program goes to the step S70.

At the step 70, first, the control portion 40 calculates the target rotation speed ωMG1t of the first motor/generator MG1 in which the rotation speed of the carrier 13 becomes the target input shaft rotation speed wit under the clutch 20 being under engagement calculated at the step S69. More specifically, the control portion 40 calculates the target rotation speed ωMG1t by substituting the target input shaft rotation speed $\overline{\omega}$it_0 at the start of engagement and the rotation speed ωr of the ring gear into the following formula (7).

$$\omega MG1t = \{(\lambda +1) \times \omega it_0 - \omega r\} / \lambda \; ... \; (7)$$

ωMG1t: target rotation speed of the first motor/generator MG1:

λ: gear ratio of the planetary gear mechanism 10 ((the number of teeth of the sun gear 11) / (the number of teeth of the inner gear 14a)):

unit_0: target input shaft rotation speed at the start of engagement (rotation speed of the carrier 13):

ωr: the rotation speed of the ring gear 14.

It is noted that since the rotation speed ωr of the ring gear 14 is proportional to the vehicle speed and the rotation speed of the second motor/generator MG2, the control portion 40 calculates the rotation speed ωr of the ring gear 14 based on the vehicle speed and the rotation speed of the second motor/generator MG2. It may also be directly obtained by detecting the rotation speed ωr of the ring gear 14.

Next, the control portion 40 executes a PID control (feedback control) so that the rotation speed ωMG1r of the first motor/generator MG1 agrees with the above calculated target rotation speed ωMG1t by outputting a control signal to the first inverter 31 based on the rotation speed ωMG1r of the first motor/generator MG1 detected by the rotation speed sensor MG1-1. After the process of the step S70, the program goes to the step S71.

At the step S71, the control portion 40 starts the first engine starting process. This first engine starting process will be explained with reference to the flowchart of Fig. 11. When the first engine start process is started and when the control portion 40 judges that the engine EG has started at the step S71-1 (S71-1; YES), the first engine start process ends (process of the step S71 in Fig. 5 ends) then the program goes to the step S72 of Fig. 5 and when the control portion 40 judges that the engine EG has not started at the step S71-1 (S71-1;NO), the program goes to the step S71-2.

At the step S72-2, when the control portion 40 judges that the engine rotation speed we is judged to be equal to or more than a starting rotation speed which is necessary to set up the engine EG for starting (S71-2; YES), the program goes to the step S71-3 and judged to be less than the necessary starting rotation speed (S71-2; NO), the first engine start process ends (the process of step S71 of Fig. 5) and the program goes to the step S72 of Fig. 5.

At the step S71-3, the control portion 40 injects the fuel by the fuel injection device and at the same time ignites the plugs to start the engine EG. After the process of the step S71-3 ends, the first engine start process ends (the process of the step S71 in Fig. 5 ends) and the program goes to the step S72 of Fig. 5.

At the step S72, when the control portion 40 judges that the engine rotation speed ωe and the input shaft rotation speed ωi agree to each other (S72; YES), the program goes to the step 73 and when judged that both rotation speeds ωe and ωi do not agree with each other (S72; NO), the program returns to the step S68. It is noted that the state that the engine rotation speed we and the input shaft rotation speed ωi agree to each other is the state that the engine rotation speed we and the input shaft rotation speed ωi are in synchronization with each other and the state that the clutch 20 is synchronized.

At the step S73, the control portion 40 outputs a control signal to the actuator 50 to have the clutch 20 to be completely in engagement state. Thus the output shaft EG-1 and the input shaft 51 are completely connected to proceed to the step S74.

At the step S74, the control portion 40 stars the second engine start process. This second engine starting process will be explained with reference to the flowchart of Fig. 12. When the second engine start process is started, and when the control portion 40 judges that the engine EG has started at the step S74-1 (S74-1; YES), the second engine start process ends (process of the step S74 in Fig. 5 ends) and at the same time the engine start control in Fig. 5 ends. When the control portion 40 judges that the engine EG has not started at the step S74-1 (S74-1; NO), the program goes to the step S74-2.

At the step S74-2, when the control portion 40 judges that the engine rotation speed we is judged to be equal to or more than the above explained starting rotation speed (S74-2; YES), the program goes to the step S74-3 and judged to be less than the starting rotation speed (S74-2; NO), the program goes to the step S74-4.

At the step S74-3, the control portion 40 injects the fuel by the fuel injection device and at the same time ignites the plugs to start the engine EG. After the process of the step S74-3 ends, the second engine start process ends (the process of the step S74 in Fig. 5 ends) and at the same time the engine start process in Fig. 5 ends.

At the step S74-4, the control portion 40 outputs a control signal to the first inverter 31 to increase the rotation speed ωMG1r of the first motor/generator MG1, thereby to increase the engine rotation speed ωe. After the process of the step S74-4, the program returns to the step S74-2.

When the engine EG starts, the control portion 40 outputs the control signal to the engine EG to generate a desired engine torque at the engine EG and at the same time outputs the control signal to the first inverter 31 to start electricity generation at the first motor/generator MG1. Under this state, the vehicle is driven under the split running mode.

(Clutch torque map replacement control)

Next, the clutch torque map replacement control will be explained with reference to the flowchart indicated in Fig. 13. When the vehicle is in running state, the clutch torque map replacement control starts and at the step S254, when the control portion 40 judges that the learning established flag is ON (S254; YES), he control portion 40 advances the program to the step S255 and when the control portion 40 judges that the learning established flag is OFF (S254; NO), the control portion 40 repeats the process of the step S254.

At the step S256, when the control portion 40 judges that the clutch 20 is in a complete engagement state or in a complete non-engagement state (complete disconnection state) at the step S255; YES, the control portion advances the program to the step S256 and on the other hand, when the control portion 40 judges that the clutch 20 is neither in a complete engagement state nor in a complete non-engagement state (complete disconnection state) (at the step S255; NO), the control portion advances the program to the step S258. More specifically, the control portion 40 judges that the clutch 20 is in a complete engagement state or in a complete non-engagement state based on the detected clutch stroke St. Alternatively, the control portion 40 judges that the clutch 20 is in a complete engagement state or in a complete non-engagement state based on a deviation between the detected engine rotation speed $\overline{\omega}e$ and the input shaft rotation speed $\overline{\omega}i$.

At the step S256, the control portion 40 replaces the clutch torque map and sets the learning finishing flag OFF at the step S257. After the process of the step 257, the program returns to the step S254. As mentioned above, the clutch torque map is replaced under s state in which the clutch control is not interfered (the clutch 20 being in complete engagement state or in complete non-engagement state).

At the step S258, the control portion sets the learning finishing flag ON and the program returns to the step S254.

(Engine Brake Generation Control)

The engine brake generation control will be explained hereinafter with reference to the flowchart shown in Fig. 14. This embodiment indicates the calculation of the clutch torque map to be replaced as explained above when the engine brake is generated

As explained, when the engine brake becomes necessary, the engine brake control starts and the program goes to the step S566. It is noted that the processes of the steps S566 and S567 in Fig. 14 are the same as those of the steps S66 and S67 explained with reference to the flowchart in Fig. 5 and the explanation thereof is omitted here. After the process of the step S567, the program goes to the step S568. At the step S568, the control portion 40 executes the clutch torque control as explained in the flowchart in Fig. 6. After the process of the step S568, the program goes to the step S569.

It is noted that the processes of the steps S569 and S570 in Fig. 14 are the same as those of the steps S69 and S70 explained with reference to the flowchart in Fig. 5 and the explanation thereof is omitted here. The program goes to the step S572 after the process of the step S570.

At the step S572, when the control portion 40 judges that the engine rotation speed $\overline{\omega}e$ agrees with the input shaft rotation speed $\overline{\omega}i$ (at the step S572; YES), the control portion 40 advances the program to the step S573 and when the control portion 40 judges that the engine rotation speed $\overline{\omega}e$ does not agree with the input shaft rotation speed $\overline{\omega}i$ (at the step S572; NO), the control portion 40 returns the program to the step S568.

At the step S573, the control portion 40 outputs the control signal to the actuator 50 to have the clutch 20 to bring into complete engagement state and completely connect the output shaft EG-1 and the input shaft 51. After the process of the step S573, the engine brake generation control ends.

(Clutch torque map calculation control under vehicle being split running mode)

The clutch torque map calculation control under vehicle being split running mode will be explained with reference to the flowchart in Fig. 15. This embodiment indicates the calculation of the clutch torque map to be replaced as explained above by allowing the clutch to be slipping when the vehicle is running under the split running mode. After the vehicle becomes in a runnable state, the program goes to the step S601.

At the step S601, when the control portion 40 judges that the vehicle is running under the above explained split running mode (step S601; YES), the control portion 40 advances the program to the step S602, and when the control portion 40 judges that the vehicle is not running under the above explained split running mode (step S601; NO), the control portion 40 repeats the process of the step S601.

At the step S602, when the control portion 40 judges that the predetermined time or more has lapsed after the previous clutch torque map correction (at the step S602; YES), the control portion 40 advances the program to the step S603, and when the control portion 40 judges that the predetermined time or more has not yet lapsed after the previous clutch torque map correction (at the step S602; NO), the control portion 40 advances the program to the step S606. By the process of the step S602, the frequent clutch torque map correction can be prevented or minimized.

At the step S603, when the control portion 40 judges that the clutch difference rotation speed $\Delta\overline{\omega}r$ is equal to or more than the first rotation speed (S603; YES), the control portion 40 advances the program to the step S604, and when the control portion 40 judges that the clutch difference rotation speed $\Delta\overline{\omega}r$ is less than the second rotation speed (S603; NO), the control portion 40 advances the program to the step S606.

At the step S604, when the control portion 40 judges that the clutch difference rotation speed $\Delta\overline{\omega}r$ is equal to or more than the second rotation speed (S604; YES), the control portion 40 advances the program to the step S607, and when the control portion 40 judges that the clutch difference rotation speed $\Delta\overline{\omega}r$ is less than the second rotation speed (S604; NO), the control portion 40 advances the program to the step S605.

It is noted that the second rotation speed is slower than the first rotation speed. In other words, when the clutch difference rotation speed $\Delta\overline{\omega}r$ is not faster than the first rotation speed and not slower than the second rotation speed, which means when the clutch difference rotation speed $\Delta\overline{\omega}r$ keeps the stable rotation speed, the program goes to the step S607 to execute the clutch torque map correction. This is because the generation of the electricity by the first motor/generator MG1 is interfered when the clutch difference rotation speed $\Delta\overline{\omega}r$ is faster than the first rotation speed. When the clutch 20 slips too much, a part of the engine output energy is turned to be the heat and discharged. However, on the other hand, since a necessary amount of drive force is necessary to run the vehicle, as the result, the generation amount by the first motor/generator MG1 has to be reduced.

Further, when the clutch difference rotation speed $\Delta\overline{\omega}r$ is less than the second rotation speed, the deviation of friction coefficient (friction coefficient of the clutch 20) between the flywheel 21 and the clutch disc 22 becomes great, and an accurate calculation of the estimated clutch torque Tc_tmp cannot be performed. This may lead to non-accurate clutch torque map correction.

At the step S605, the control portion 40 reduces the target clutch torque Tct by a predetermined amount. After the process of the step S605, the program goes to the step S607.

At the step 606, the control portion 40 sets the target clutch torque Tct to the value by which a complete engagement of the clutch 20 can be performed. After the process of the step S606, the program goes to the step S608.

At the step S607, the control portion 40 calculates the clutch torque map. This process is the same as the process of the clutch torque map calculation in Fig. 7. It is noted however, that in the clutch torque map calculation control under the vehicle being under split running, the estimated clutch torque Tc_tmp is obtained based on the flowing formula (20) at the step s330 in Fig. 9.

$$Tc_tmp = |\ Tca - Ii \times d\omega i / dt\ | \ ...\ (20)$$

Tc_tmp: estimated clutch torque;
Tca: torque inputted to the carrier 13;
Ii: rotational inertia on the input shaft;
dωi / dt: input shaft rotational acceleration.

The torque inputted to the carrier 13 can be obtained vy the following formula (21).

$$Tca = (1 / \eta) \times ((1 + \lambda) / \lambda) \times Ts \ ...\ (21)$$

Tca = torque inputted to the carrier 13;
η = transmission efficiency from the sun gear 11 to the carrier 13;
A = gear ratio of the planetary gear mechanism 10;
Ts = torque transmitted to the sun gear 11.

Then the torque Ts transmitted to the sub gear 11 is calculated by the following formula (22).

$$Ts = TMG1 - Is \times d\omega s / dt \ ...\ (22)$$

Ts = torque transmitted to the sun gear 11.
TMG1: torque (negative value torque) generated by the first motor/generator MG1:

Is: rotation inertia on the sun gear 11 shaft
dωs / dt: rotation acceleration of the sun gear 11.

It is noted here that the first motor/generator MG1 is in generation operation and accordingly, the torque TMG1 generated by the first motor/generator MG1 is negative value. The torque TMG1 is detected by the current generated by the first motor/generator MG1. After the process of the step S607, the program goes to the step S608.

At the step S608, the control portion 40 calculates the target clutch stroke Sr relative to the target clutch torque Tct based on the then memorized clutch torque map. After the process of the step S608, the program goes to the step S609.

At the step S609, the control portion 40 performs the feedback control so that the detected clutch stroke St agrees to the calculated target clutch stroke Sr. After the process of the step S609, the program returns to the step S601.

(The advantageous Effects of the Embodiment)

As explained, it is apparent that in the step S329 of Fig. 9, the control portion 40 calculates the target clutch stroke Sr_tmp which corresponds to the target clutch torque Tct based on the current clutch torque map. Next, in the step S330, the control portion 40 (estimated clutch torque calculating means) calculates the estimated clutch torque Tc_tmp according to the torque generated by the first motor/generator MG1 and the input shaft rotation acceleration $d\omega i$ / dt based on the formula (1) above under the clutch being in non-synchronized state. Then the control portion 40 (correcting means) calculates the estimated clutch stroke Sc_tmp by referencing the estimated clutch torque Tc_tmp to the current clutch torque map. Next, at the step S333, the control portion 40 calculates the clutch torque correction ratio Kh based on the estimated clutch stroke Sc_tmp and the target clutch stroke Sr_tmp. Then the control portion 40 corrects the clutch torque map based on the clutch torque correction ratio Kh.

The torque generated by the first motor/generator MG1 is different from the torque generated by the engine EG, accurate torque detection can be performed. Due to this reason, an accurate clutch torque correction ratio Kh can be calculated based on this accurately detected torque of the first motor/generator MG1. Therefore, an accurate correction of the clutch torque map can be performed.

Further, no further torque detention device is needed separately, and since based on the existing torque generated by the first motor/generator MG1, the clutch torque can be corrected the clutch torque map can be corrected by just adding the program therefor. This can provide a hybrid drive device 100 which can correct the clutch torque inexpensively.

Further, by executing the engine start control as shown in Fig. 5, the control portion 40 calculates the estimated clutch torque Tc_tmp under the clutch 20 being in non-synchronized state upon engaging the clutch 20 which is disconnected but rotating the first motor/generator MG1 in order to start the engine EG which has been stopped. Thus, it is not necessary to start the engine EG just for correcting the clutch torque map thereby preventing unnecessary consumption of fuel.

Further, by executing the engine brake generation control shown in Fig. 14, the control portion 40 calculates the estimated clutch torque Tc_tmp under the clutch 20 being in non-synchronized state upon engaging the clutch 20 which has been disconnected in order to generate braking force by the friction of the engine EG when the vehicle is running under the torque generated by the first motor/generator MG1 only. Thus, it is not necessary to start the engine EG just for correcting the clutch torque map thereby preventing unnecessary consumption of fuel.

Further, by executing the clutch torque map calculation control under the vehicle being under split running shown in Fig. 15, the control portion 40 calculates the estimated clutch torque Tc_tmp by non-synchronizing the clutch 20 when the vehicle is running by the engine torque and under the electricity generation by the first motor/generator MG1. Therefore, it is not necessary to re-engage the clutch 20 after the complete disconnection just for the correction of the clutch torque map and accordingly, the generation by the first motor/generator MG1 is not interrupted under the case where the battery is not sufficiently charged. This can prevent or minimize the worsening of fuel efficiency.

Further, the drive force deficiency can be prevented when the torques of both first and second motor/generators MG1 and MG2 are not enough to reach the required drive force. Further, since the execution of the clutch torque map correction is not limited only at the time of vehicle starting and speed changing operations as conventionally is, the correction of the clutch torque map can be surely executed.

Further, the control portion 40 calculates the estimated clutch torque Tc_tmp when the difference rotation speed of the clutch 20 is less than the first rotation speed (YES at the step S603 in Fig. 15) and is equal to or more than the second rotation speed (YES at the step S604). Therefore, the clutch torque map can be accurately corrected without interfering the generation of the first motor/generator MG1.

Further, the control portion 40 calculates the estimated clutch torque when the absolute value of the input shaft 51 rotation acceleration $d\bar{\omega}i$ / dt is equal to or less than the predetermined value (YES at the step S312 in Fig. 8). Therefore, the calculation of the estimated clutch torque Tc_tmp is avoided when the absolute value of the input shaft 51 rotation acceleration $d\bar{\omega}i$ / dt is larger than the predetermined value and the rotation acceleration of the input shaft 51 is not in a stable condition and accordingly, since the calculation of the estimated clutch torque Tc_tmp under an unstable condition can be avoided, the clutch torque map can be accurately corrected.

Further, the control portion 40 calculates the estimated clutch torque Tc_tmp when the absolute value of the rotation acceleration of the first motor/generator MG1 (rotation acceleration $d\bar{\omega}s$ / dt of the sun gear 11) is equal to or less than the predetermined value (YES at the step S312 in Fig. 8). Accordingly, the estimated clutch torque Tc_tmp is not calculated when the absolute value of the rotation acceleration of the first motor/generator MG1 becomes larger due to a sudden or a big change of vehicle state (acceleration or deceleration) and when the rotation acceleration of the first motor/generator MG1 is in unstable condition. Accordingly, since the calculation of the estimated clutch torque Tc_tmp under an unstable condition can be avoided, the clutch torque map can be accurately corrected.

(Second Embodiment)

The second embodiment of the hybrid drive device 200 will be explained with reference to the attached drawing, Fig. 16, but only a portion where the structure is different from the structure of the hybrid drive device 100 according to the first embodiment. The portions of the structure of the hybrid drive device 200 of the second embodiment which are same as those of the structure of the hybrid drive device 100 of the first embodiment will be omitted from the detail explanation, by merely designating the same numerals and symbols with the first embodiment.

The hybrid drive device 200 according to the second embodiment includes the first rotor Ro1 of the first motor/generator MG1 connected to the input shaft 51 and at the same time connected to the ring gear 14 of the planetary gear mechanism 10. The sun gear 11 of the planetary gear mechanism 10 is connected to the second rotor Ro2 of the second motor/generator MG2. The carrier 13 is formed with an output gear 13a which is engaged with the input gear 72.

The ring gear 14 is rotationally connected to or securely connected to the housing 201 by means of a brake B. The brake B is controlled by the control portion 40.

Under the electric running mode, the control portion 40 controls the actuator 50 to disconnect the clutch 20 and at the same time controls the brake B to fix the ring gear 14 to the housing 201. Further the control portion 40 outputs a control signal to the second inverter 32 to drive the second motor/generator MG2 so that the drive force thereof becomes the required drive force. Further, when a sufficient required drive force cannot be obtained only by the torque from the second motor/generator MG2, the control portion 40 controls the actuator 50 to disconnect the clutch 20 and at the same time controls the brake B so that the ring gear 14 is rotatably connected to the housing 201. Then the control portion 40 outputs control signals to both first and second inverters 31 and 32 to drive both first and second motor/generators MG1 and MG2 to output the drive force to be the required drive force.

Under the split running mode, the control portion 40 controls the actuator 50 to engage the clutch 20 and at the same time controls the brake B to rotatably support the ring gear 14 on the housing 201. Further the control portion 40 outputs a control signal to the second inverter 32 to drive the second motor/generator MG2 and at the same time controls the engine EG to generate a predetermined torque. Thus, the engine EG and the input shaft 51 are connected and the engine torque is transmitted to the first motor/generator MG1 and accordingly to the ring gear 14. The first motor/generator MG1 generates the electricity by the engine torque. The engine torque inputted to the ring gear 14 and the motor/generator MG2 torque are transmitted to the drive wheels Wr and Wl.

According to the second embodiment, the formula (31) is adopted instead of the formula (1) in the case of the first embodiment.

$$Tc_tmp = | TMG1 + Tr\text{-}Ii \times d\omega i / dt | \ldots (31)$$

Tc_tmp: estimated clutch torque:

TMG1: torque generated at the first motor/generator MG1:

Tr : torque inputted to the ring gear 14:

Ii : rotation inertia on the input shaft:

$d\omega i / dt$: input shaft rotation acceleration.

It is noted that the rotation inertia Ii on the input shaft includes a clutch disc 22, input shaft 51, carrier 13 and the first rotor Ro1. The torque TMG1 generated at the first motor/generator MG1 is a positive value when the engine EG is started and is a negative value when the vehicle is under split running mode.

The torque Tr inputted to the ring gear 14 is calculated by the following formula (32):

$$Tr = -\eta 2 \times Ts / \lambda \ldots (32)$$

$\eta$ = transmission efficiency from the sun gear 11 to the carrier 13;
$\lambda$ = gear ratio of the planetary gear mechanism 10 (ratio of the number of teeth between the sun gear 11 and the inner gear 14a) (the number of teeth of the sun gear 11/the number of teeth of the inner gear 14a);
Ts = torque transmitted to the sun gear 11.

The torque Ts transmitted to the sun gear 11 is calculated by the following formula (33):

$$Ts = TMG2 - Is \times d\omega s / dt \ ... \ (33)$$

Ts = torque transmitted to the sun gear 11:

TMG2: torque generated by the second motor/generator MG2:

Is: rotation inertia on the sun gear 11 shaft (including the rotation inertias of the sun gear 11, shaft connecting the sun gear 11 and the second rotor Ro2 and the second rotor Ro2:

dωs / dt: rotation acceleration of the sun gear 11.

According to the second embodiment, the formula (34) below is adopted instead of the formula (7) of the first embodiment.

$$\omega MG1t = \omega it \ ... \ (34)$$

ωMG1t: target rotation speed of the first motor/generator MG1
ωit: target input shaft rotation speed.

(Other Embodiments)

The control portion 40 according to the embodiment explained above calculates the input shaft rotation speed ωi which is the input shaft 51 rotation speed, based on the rotation speed ωMG1r of the first motor/generator MG1 inputted from the rotation speed sensor MG1-1, the rotation speed ωMG2r of the second motor/generator MG2 (calculated from the vehicle speed V) and the ratio of number of teeth between the sun gear 11 and the inner gear 14a. However, the input shaft rotation speed ωi can be directly detected by providing an input shaft rotation speed sensor which detects the rotation speed of the input shaft 51 in the vicinity of the input shaft 51.

According to the embodiments of the invention as explained above, the clutch 20 is formed by a dry-type single plate clutch. However, the present invention can be applicable to the hybrid drive devices 100 and 200 which use a wet type multi-plate clutch as the clutch 20.

According to the embodiments of the invention explained above, a normal close type clutch is used for the clutch 20. However, any type such as normal open type clutch may be used. Further, the clutch of the following type can be used for the present invention wherein the stand-by position indicates the clutch stroke is zero and the clutch may be completely engaged at the stand-by position and as the clutch stroke increases, the clutch torque may be decreased to eventually the stroke becomes zero. The present invention may be applicable to the hybrid drive device having such clutch.

According to the embodiments explained above, the control amount corresponding to the operation of the actuator 50 indicates the clutch stroke and the clutch torque is controlled by the stroke of the actuator 50. However, the control amount corresponding to the actuator 50 may include hydraulic pressure, air pressure, voltage, electric current, load or pressure influencing on the clutch disc 22 and based on the control amount, the clutch may be controlled.

According to the embodiments explained above, the correction of the clutch torque map of the previous time as indicated at the step S602 in Fig. 15 is the map correction determined by the engine start control shown in Fig. 5, the engine brake generation control shown in Fig. 14 and the clutch torque map calculation control under the split running mode shown in Fig. 15. However, the correction of the clutch torque map of the previous time as indicated at the step S602 in Fig. 15 may be the map correction determined by the correction of the clutch torque map determined by the correction by the clutch torque map calculation control under the split running mode. Alternatively, the correction of the clutch torque map of the previous time as indicated at the step S602 in Fig. 15 is the map correction determined by either two of the controls of the engine start control shown in Fig. 5, the engine brake generation control shown in Fig. 14 and the clutch torque map calculation control under the split running mode shown in Fig. 15.

Further, in the electric running mode, when the vehicle running under the torque of only the first motor/generator MG1 may engage the clutch 20 upon the vehicle running by the torques of both first and the second motor/generators MG1 and MG2.

According to the embodiments explained above, at the step S66, shown in Fig. 5, the control portion 40 calculates the friction torque Te of the engine EG based on the engine oil temperature by estimating the oil temperature based on the water temperature te detected by the water temperature sensor EG-3. The control portion 40 may calculate the engine friction torque Te based on the engine oil temperature detected by the oil temperature sensor which detects the oil temperature of the engine EG.

EXPLANATION OF REFERENCE NUMERALS

In the drawings:

20: clutch;
31: first inverter (motor/generator generation torque detecting means);
40; control portion (target control amount calculating means, clutch control means, estimated clutch torque calculating means, correction coefficient calculating means and correcting means):
50: actuator (clutch actuator)
51: input shaft 51
52: stroke sensor
100: hybrid drive device according to the first embodiment
200: hybrid drive device according to the second embodiment
EG: engine
EG-1: output shaft
MG-1: first motor/generator (motor/generator)
Wl, Wr: drive wheel
"t": elapsed time from the start of clutch engagement
Tst: target clutch synchronizing time
$\overline{\omega}$i: input shat rotation speed
$\overline{\omega}$ir: current input shaft rotation speed
$\overline{\omega}$it_0: target input shaft rotation speed at the start of engagement
$\overline{\omega}$it: target input shaft rotation speed when the clutch is under engagement
$\overline{\omega}$e: engine rotation speed
$\Delta\overline{\omega}$r: actual clutch difference rotation speed
$\overline{\omega}$s: rotation speed of sun gear
$\overline{\omega}$MG1t: target rotation speed of the first motor/generator
$\overline{\omega}$MG1r: rotation speed of the first motor/generator
Tct: target clutch torque
Tc_tmp: estimated clutch torque
Sc: estimated clutch stroke
Sr: target clutch stroke
Kh: clutch torque correction ratio
N (i): reflecting ratio

**Claims**

**1.** A hybrid drive device comprising;
an engine (EG) which outputs a torque to an output shaft;
an input shaft (51) which is rotated in association with a rotation of a drive wheel;
a clutch (20) disposed between the output shaft and the input shaft for connecting or disconnecting the output shaft and the input shaft;
a motor/generator (MG1, MG2) which is rotated in association with a rotation of the input shaft;
a target control amount calculating means (40) for calculating a target control amount of an actuator which corresponds to a target clutch torque, based on a clutch torque map which indicates a relationship between a clutch torque generated by the clutch and a control amount corresponding to an operation amount of the actuator which drives the clutch;
a clutch control means (40) for controlling the actuator to be operated with the target control amount so that the clutch torque agrees to the target clutch torque;
**characterised in that** an estimated clutch torque calculating means (40) for calculating an estimated clutch torque based on a torque which is generated by the motor/generator and a rotation acceleration of the input shaft when the clutch is in asynchronous state; and,

a correcting means (40) for correcting the clutch torque map based on the target clutch torque and the estimated clutch torque.

2. The hybrid drive device according to claim 1, wherein the estimated clutch torque calculating means (40) calculates the estimated clutch torque (Tc_tmp) under the clutch being in the asynchronous state, upon connecting the clutch which has been disconnected by rotating the motor/generator for starting the engine which has been stopped.

3. The hybrid drive device according to claim 1, wherein the estimated clutch torque calculating means (40) calculates the estimated clutch torque (Tc_tmp) under the clutch being in the asynchronous state, upon connecting the clutch which has been disconnected in order to generate a braking force by friction of the engine under the vehicle being running only by the torque from the motor/generator.

4. The hybrid drive device according to claim 1, wherein the estimated clutch torque calculating means (40) calculates the estimated clutch torque (Tc_tmp) by operating the clutch to be in the asynchronous state, when the vehicle is running by the engine torque and the motor/generator is in generation operation.

5. The hybrid drive device according to claim 4, wherein the estimated clutch torque calculating means (40) calculates the estimated clutch torque (Tc_tmp) when a difference rotation speed of the clutch is less than a first rotation speed and equal to or more than a second rotation speed which is slower than the first rotation speed.

6. The hybrid drive device according to any one of claims 1 through 5, wherein the estimated clutch torque calculating means (40) calculates the estimated clutch torque (Tc_tmp) when an absolute value of the rotation acceleration of the input shaft is equal to or less than a predetermined value.

7. The hybrid drive device according to any one of claims 1 through 6, wherein the estimated clutch torque calculating means (40) calculates the estimated clutch torque (Tc_tmp) when an absolute value of the rotation acceleration of the motor/generator is equal to or less than a predetermined value.

## Patentansprüche

1. Hybridantriebseinrichtung, mit:

einer Brennkraftmaschine (EG), die ein Drehmoment an eine Ausgangswelle ausgibt;
einer Eingangswelle (51), die sich in Übereinstimmung mit einer Drehung eines Antriebsrades dreht;
einer Kupplung (20), die zwischen der Ausgangswelle und der Eingangswelle zum Verbinden oder Lösen der Ausgangswelle und der Eingangswelle angeordnet ist;
einem Motor/Generator (MG1, MG2), der sich in Übereinstimmung mit einer Drehung der Eingangswelle dreht;
einem Sollsteuerumfang-Berechnungsmittel (40), zum Berechnen eines Sollsteuerumfangs eines Aktuators, der einem Sollkupplungsdrehmoment entspricht, basierend auf einer Kupplungsdrehmomentkarte, die ein Verhältnis zwischen einem Kupplungsdrehmoment, das von der Kupplung erzeugt wird, und einem Steuerumfang, der einem Betätigungsbetrag des Aktuators entspricht, der die Kupplung antreibt, anzeigt;
einem Kupplungssteuermittel (40) zum Steuern des Aktuators, so dass er mit dem Sollsteuerumfang derart betätigt wird, dass das Kupplungsdrehmoment mit dem Sollkupplungsdrehmoment übereinstimmt;

**gekennzeichnet durch**

ein Schätzkupplungsdrehmoment-Berechnungsmittel (40) zum Berechnen eines geschätzten Kupplungsdrehmoments basierend auf einem Drehmoment, das von dem Motor/Generator erzeugt wird, und einer Drehbeschleunigung der Eingangswelle, wenn sich die Kupplung in einem asynchronen Zustand befindet; und
ein Korrekturmittel (40) zum Korrigieren der Kupplungsdrehmomentkarte basierend auf dem Sollkupplungsdrehmoment und dem geschätzten Kupplungsdrehmoment.

2. Hybridantriebseinrichtung nach Anspruch 1, bei der das Schätzkupplungsdrehmoment-Berechnungsmittel (40) das geschätzte Kupplungsdrehmoment (Tc_tmp) bei der Kupplung in dem asynchronen Zustand beim Verbinden der Kupplung berechnet, die durch Drehen des Motors/Generators zum Starten des Motors, der angehalten worden ist, gelöst worden ist.

3. Hybridantriebseinrichtung nach Anspruch 1, bei der das Schätzkupplungsdrehmoment-Berechnungsmittel (40) das geschätzte Kupplungsdrehmoment (Tc_tmp) bei der Kupplung in dem asynchronen Zustand beim Verbinden der Kupplung berechnet, die gelöst worden ist zum Erzeugen einer Bremskraft durch Reibung des Motors, wobei das Fahrzeug nur durch das Drehmoment von dem Motor/Generator gelaufen ist.

4. Hybridantriebseinrichtung nach Anspruch 1, bei der das Schätzkupplungsdrehmoment-Berechnungsmittel (40) das geschätzte Kupplungsdrehmoment (Tc_tmp) durch Betätigen der Kupplung berechnet, so dass sie sich in dem asynchronen Zustand befindet, wenn das Fahrzeug durch das Motordrehmoment läuft und der Motor/Generator sich in einem Generierungsbetrieb befindet.

5. Hybridantriebseinrichtung nach Anspruch 4, bei der das Schätzkupplungsdrehmoment-Berechnungsmittel (40) das geschätzte Kupplungsdrehmoment (Tc_tmp) berechnet, wenn ein Unterschied in der Drehzahl der Kupplung geringer als eine erste Drehzahl ist und gleich oder größer als eine zweite Drehzahl ist, die langsamer als die erste Drehzahl ist.

6. Hybridantriebseinrichtung nach einem der Ansprüche 1 bis 5, bei der das Schätzkupplungsdrehmoment-Berechnungsmittel (40) das geschätzte Kupplungsdrehmoment (Tc_tmp) berechnet, wenn ein Absolutwert der Drehbeschleunigung der Eingangswelle gleich oder geringer als ein vorgegebener Wert ist.

7. Hybridantriebseinrichtung nach einem der Ansprüche 1 bis 6, bei der das Schätzkupplungsdrehmoment-Berechnungsmittel (40) das geschätzte Kupplungsdrehmoment (Tc_tmp) berechnet, wenn ein Absolutwert der Drehbeschleunigung des Motors/Generators gleich oder geringer als ein vorgegebener Wert ist.

## Revendications

1. Dispositif de commande hybride comprenant :

un moteur (EG) qui délivre un couple à un arbre de sortie ;
un arbre d'entrée (51) qui est soumis à une rotation en association avec la rotation d'une roue de commande ;
un embrayage (20) disposé entre l'arbre de sortie et l'arbre d'entrée pour brancher ou débrancher l'arbre de sortie et l'arbre d'entrée ;
un moteur/générateur (MG1, MG2) qui est soumis à une rotation en association avec la rotation de l'arbre d'entrée ;
un moyen de calcul de quantité de commande cible (40) pour calculer une quantité de commande cible d'un actionneur qui correspond à un couple d'embrayage cible sur la base d'une carte de couple d'embrayage qui indique une relation entre un couple d'embrayage généré par l'embrayage et une quantité de commande correspondant à une quantité de fonctionnement de l'actionneur qui commande l'embrayage ;
un moyen de commande d'embrayage (40) pour commander l'actionneur afin qu'il fonctionne avec la quantité de commande cible en sorte que le couple d'embrayage concorde avec le couple d'embrayage cible ;
**caractérisé en ce qu'**un moyen de calcul de couple d'embrayage estimé (40) pour calculer un couple d'embrayage estimé sur la base d'un couple qui est généré par le moteur/générateur et d'une accélération de la rotation de l'arbre d'entrée lorsque l'embrayage est à l'état asynchrone ; et
un moyen de correction (40) pour corriger la carte de couple d'embrayage sur la base du couple d'embrayage cible et du couple d'embrayage estimé.

2. Dispositif de commande hybride selon la revendication 1, dans lequel le moyen de calcul de couple d'embrayage estimé (40) calcule le couple d'embrayage estimé (Tc_tmp) tandis que l'embrayage se trouve à l'état asynchrone lors du branchement de l'embrayage qui a été débranché en faisant tourner le moteur/générateur pour faire démarrer le moteur qui a été arrêté.

3. Dispositif de commande hybride selon la revendication 1, dans lequel le moyen de calcul de couple d'embrayage estimé (40) calcule le couple d'embrayage estimé (Tc_tmp) lorsque l'embrayage est à l'état asynchrone lors du branchement de l'embrayage qui a été débranché afin de générer une force de freinage par friction du moteur tandis que le véhicule tourne uniquement par l'action du couple venant du moteur/générateur.

4. Dispositif de commande hybride selon la revendication 1, dans lequel le moyen de calcul de couple d'embrayage estimé (40) calcule le couple d'embrayage estimé (Tc_tmp) en faisant fonctionner l'embrayage pour qu'il se trouve à l’état asynchrone lorsque le véhicule tourne sous l’effet du couple moteur et que le moteur/générateur est en service de génération.

5. Dispositif de commande hybride selon la revendication 4, dans lequel le moyen de calcul de couple d’embrayage estimé (40) calcule le couple d’embrayage estimé (Tc_tmp) lorsqu’une vitesse de rotation de différence de l’embrayage est inférieure à une première vitesse de rotation et est égale ou supérieure à une seconde vitesse de rotation qui est plus lente que la première vitesse de rotation.

6. Dispositif de commande hybride selon l’une quelconque des revendications 1 à 5, dans lequel le moyen de calcul de couple d’embrayage estimé (40) calcule le couple d’embrayage estimé (Tc_tmp) lorsqu’une valeur absolue de l’accélération de rotation de l’arbre d’entrée est égale ou inférieure à une valeur prédéterminée.

7. Dispositif de commande hybride selon l’une quelconque des revendications 1 à 6, dans lequel le moyen de calcul de couple d’embrayage estimé (40) calcule le couple d’embrayage estimé (Tc_tmp) lorsqu’une valeur absolue de l’accélération de rotation du moteur/générateur est égale ou inférieure à une valeur prédéterminée.

Fig. 1

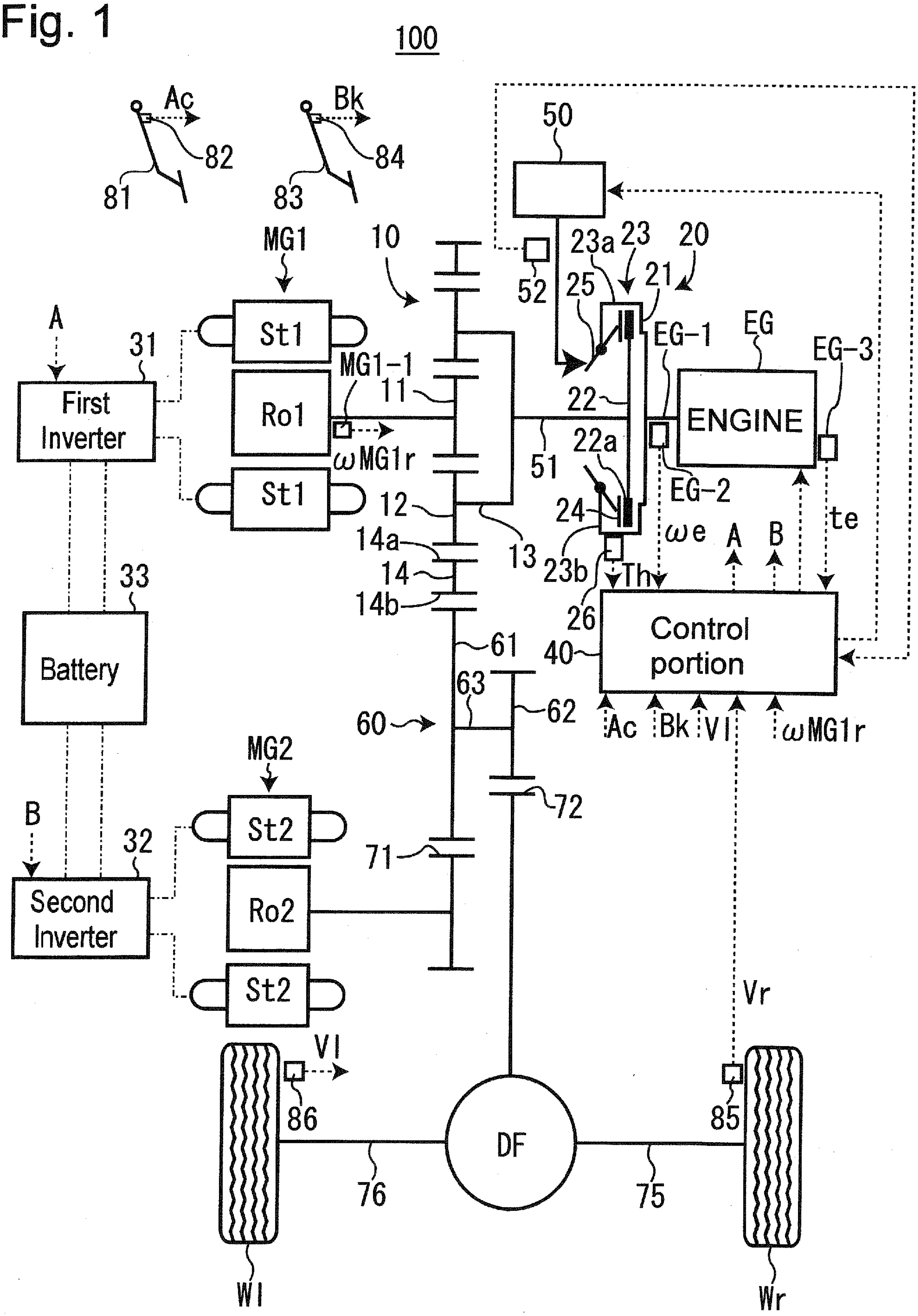
100
Ac
82
81
Bk
84
83
MG1
10
50
52
23a
23
20
25
21
A
31
First Inverter
St1
Ro1
MG1-1
11
ωMG1r
St1
12
13
22
22a
51
24
23b
26
EG-1
EG
EG-3
ENGINE
EG-2
ωe
A
B
te
Th
14a
14
14b
33
Battery
61
40
Control portion
63
62
60
Ac
Bk
Vl
ωMG1r
MG2
B
32
Second Inverter
St2
72
71
Ro2
St2
Vr
Vl
86
85
DF
76
75
Wl
Wr

Fig. 2

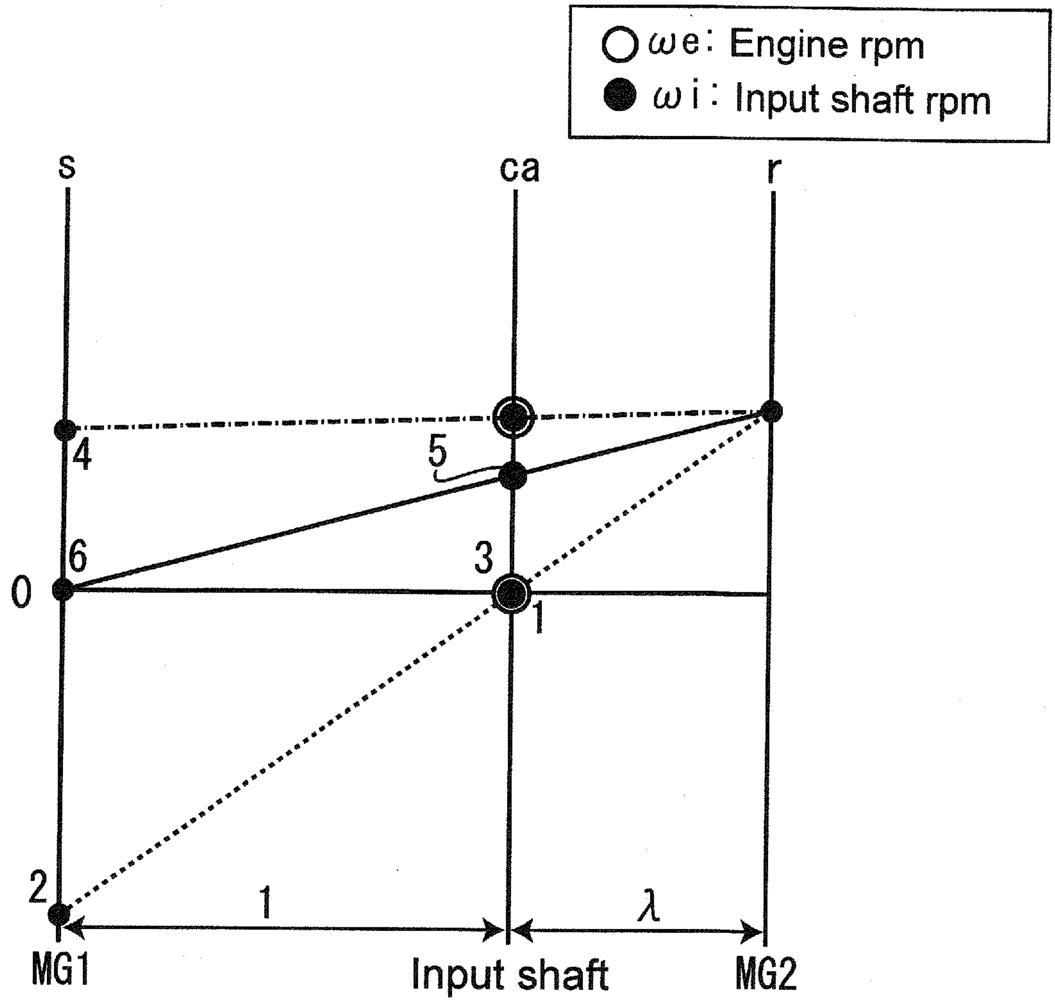
ωe: Engine rpm
ωi: Input shaft rpm
s
ca
r
4
5
6
3
0
1
2
1
λ
MG1
Input shaft
MG2

Fig. 3

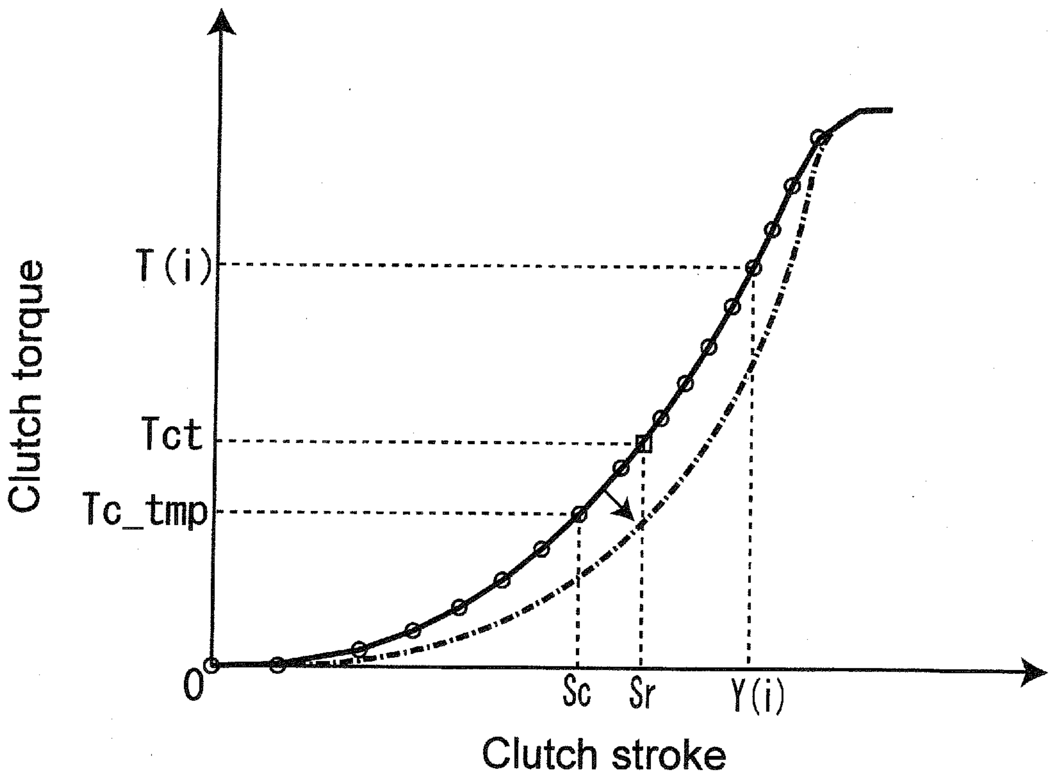

Fig. 4

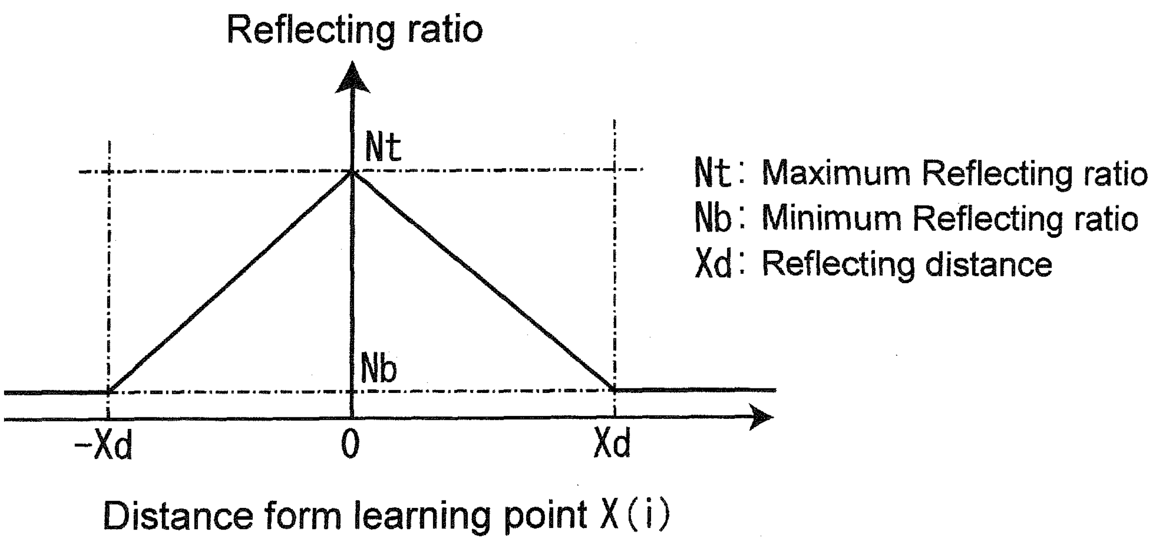
Reflecting ratio
Nt
Nb
-Xd
0
Xd
Distance form learning point X(i)
Nt: Maximum Reflecting ratio
Nb: Minimum Reflecting ratio
Xd: Reflecting distance

Fig. 5

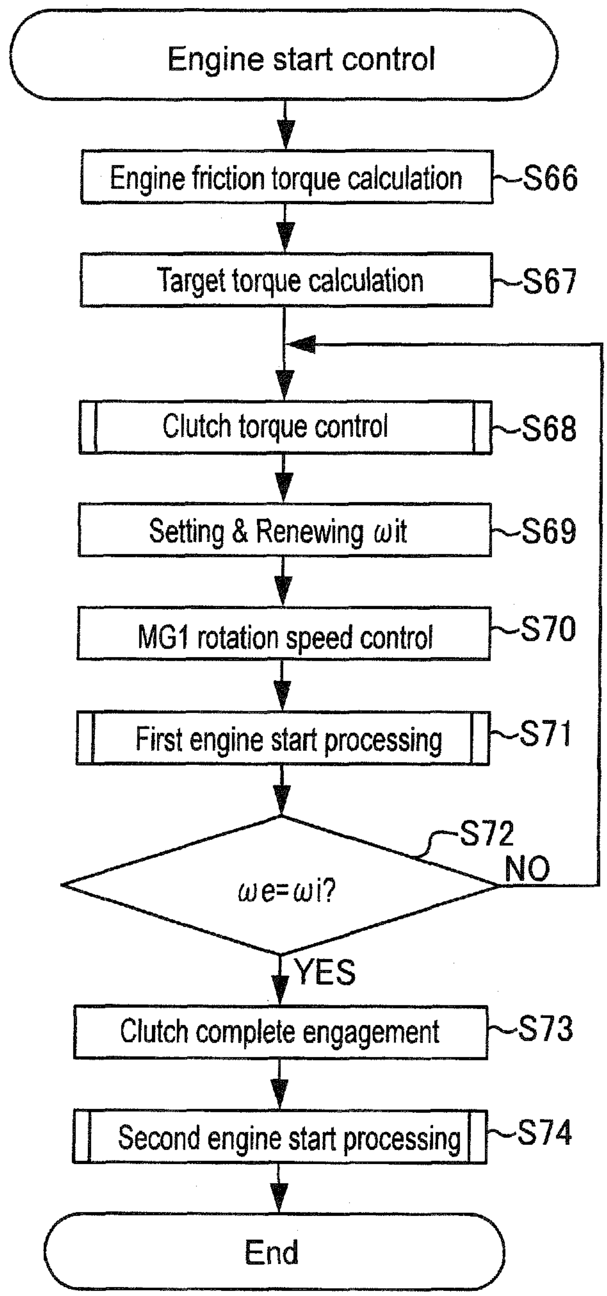
Engine start control
Engine friction torque calculation
S66
Target torque calculation
S67
Clutch torque control
S68
Setting & Renewing ωit
S69
MG1 rotation speed control
S70
First engine start processing
S71
S72
ωe=ωi?
NO
YES
Clutch complete engagement
S73
Second engine start processing
S74
End

Fig. 6

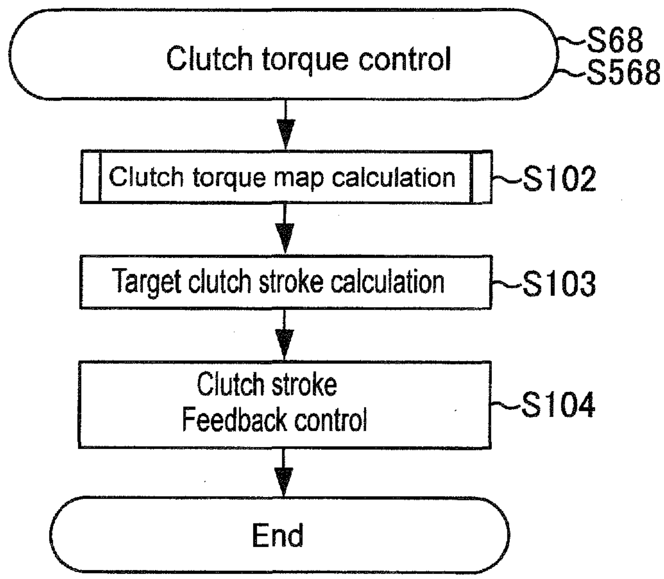
Clutch torque control
S68
S568
Clutch torque map calculation
S102
Target clutch stroke calculation
S103
Clutch stroke
Feedback control
S104
End

Fig. 7

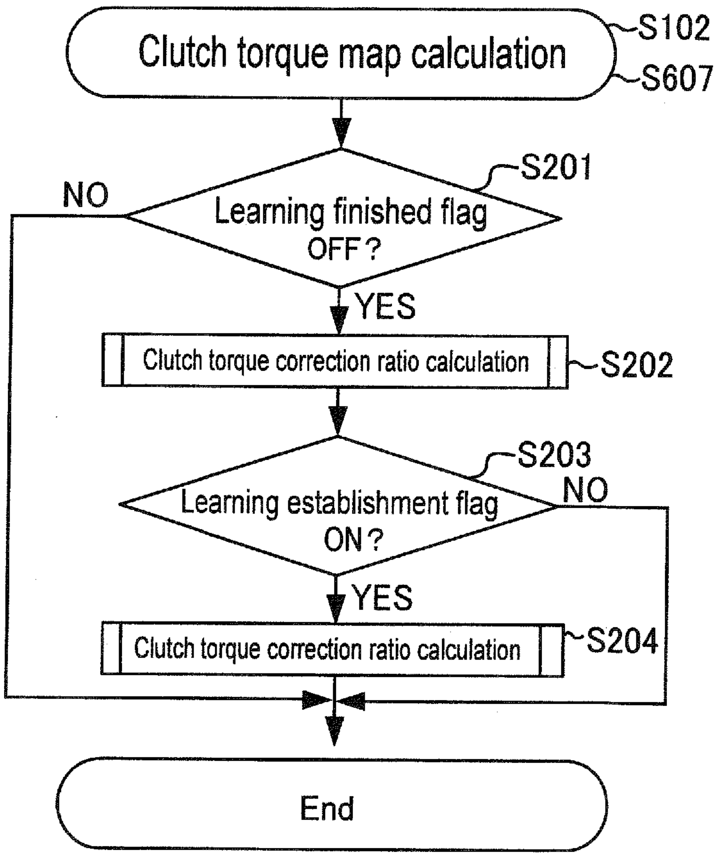
Clutch torque map calculation
S102
S607
S201
NO
Learning finished flag
OFF ?
YES
Clutch torque correction ratio calculation
S202
S203
NO
Learning establishment flag
ON ?
YES
Clutch torque correction ratio calculation
S204
End

Fig. 8

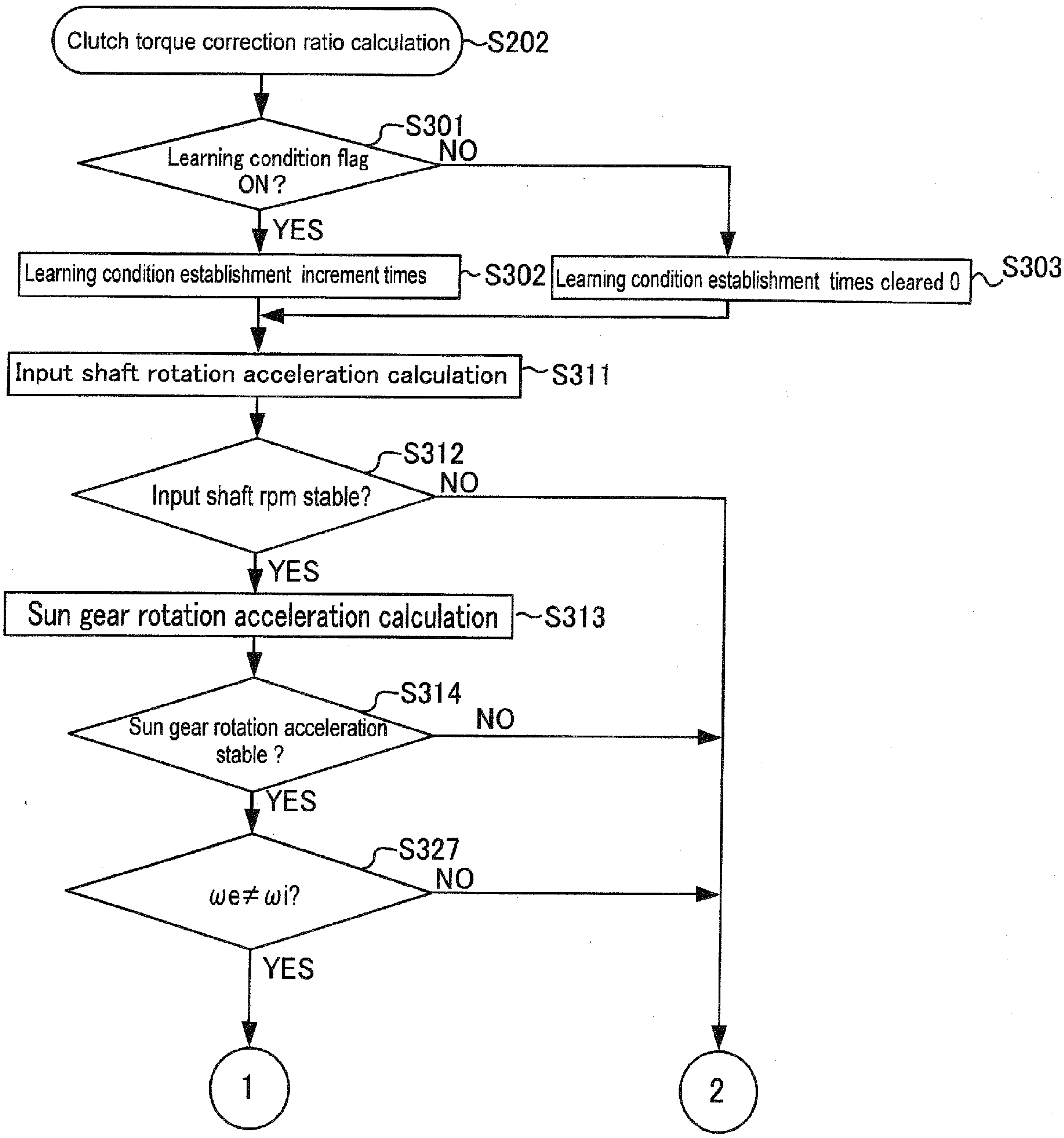
Clutch torque correction ratio calculation
S202
S301
Learning condition flag ON?
NO
YES
Learning condition establishment increment times
S302
Learning condition establishment times cleared 0
S303
Input shaft rotation acceleration calculation
S311
S312
Input shaft rpm stable?
NO
YES
Sun gear rotation acceleration calculation
S313
S314
Sun gear rotation acceleration stable ?
NO
YES
S327
ωe≠ωi?
NO
YES
1
2

Fig. 9

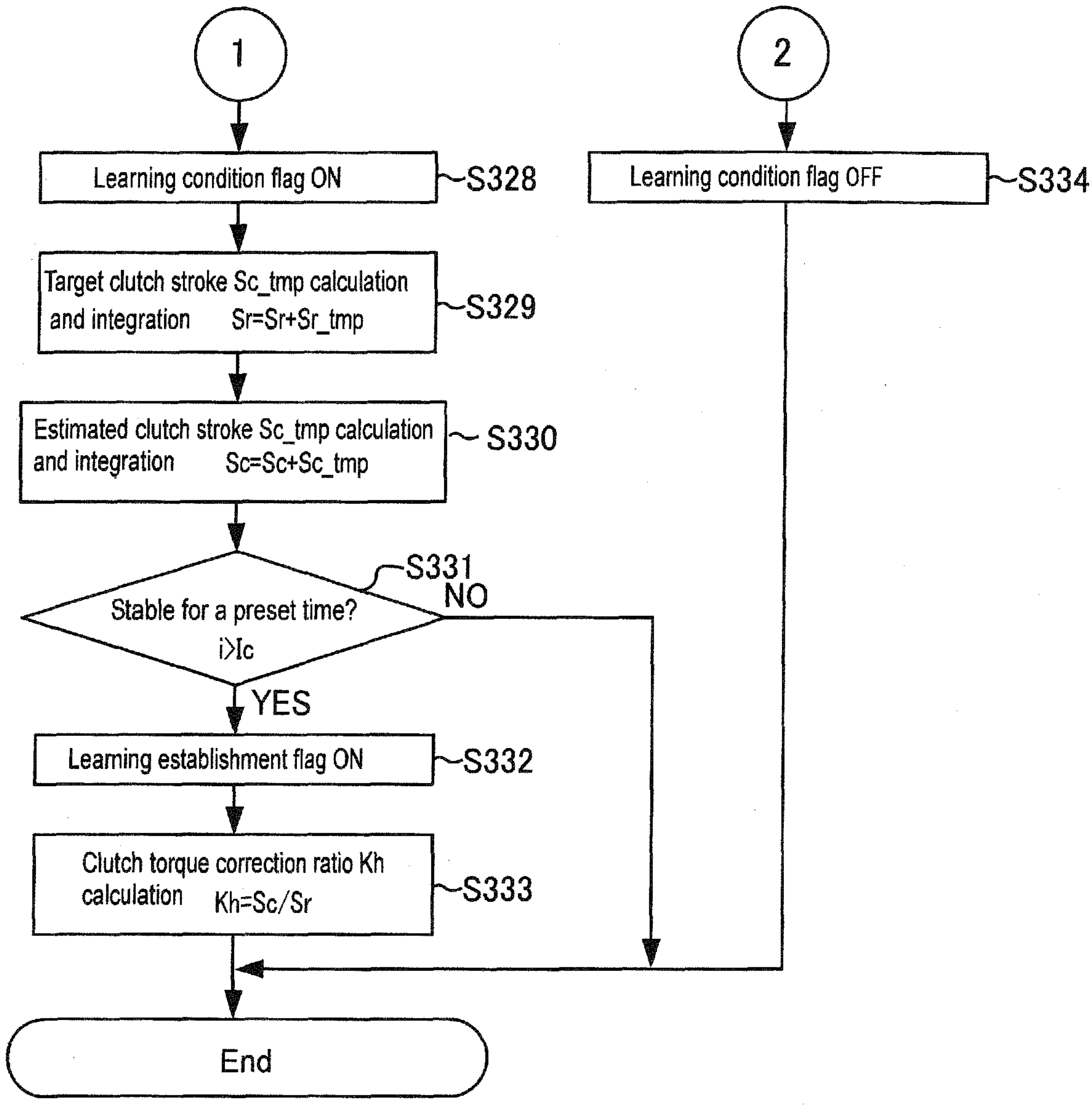
1
2
Learning condition flag ON
S328
Learning condition flag OFF
S334
Target clutch stroke Sc_tmp calculation and integration Sr=Sr+Sr_tmp
S329
Estimated clutch stroke Sc_tmp calculation and integration Sc=Sc+Sc_tmp
S330
S331
NO
Stable for a preset time? i>Ic
YES
Learning establishment flag ON
S332
Clutch torque correction ratio Kh calculation Kh=Sc/Sr
S333
End

Fig. 10

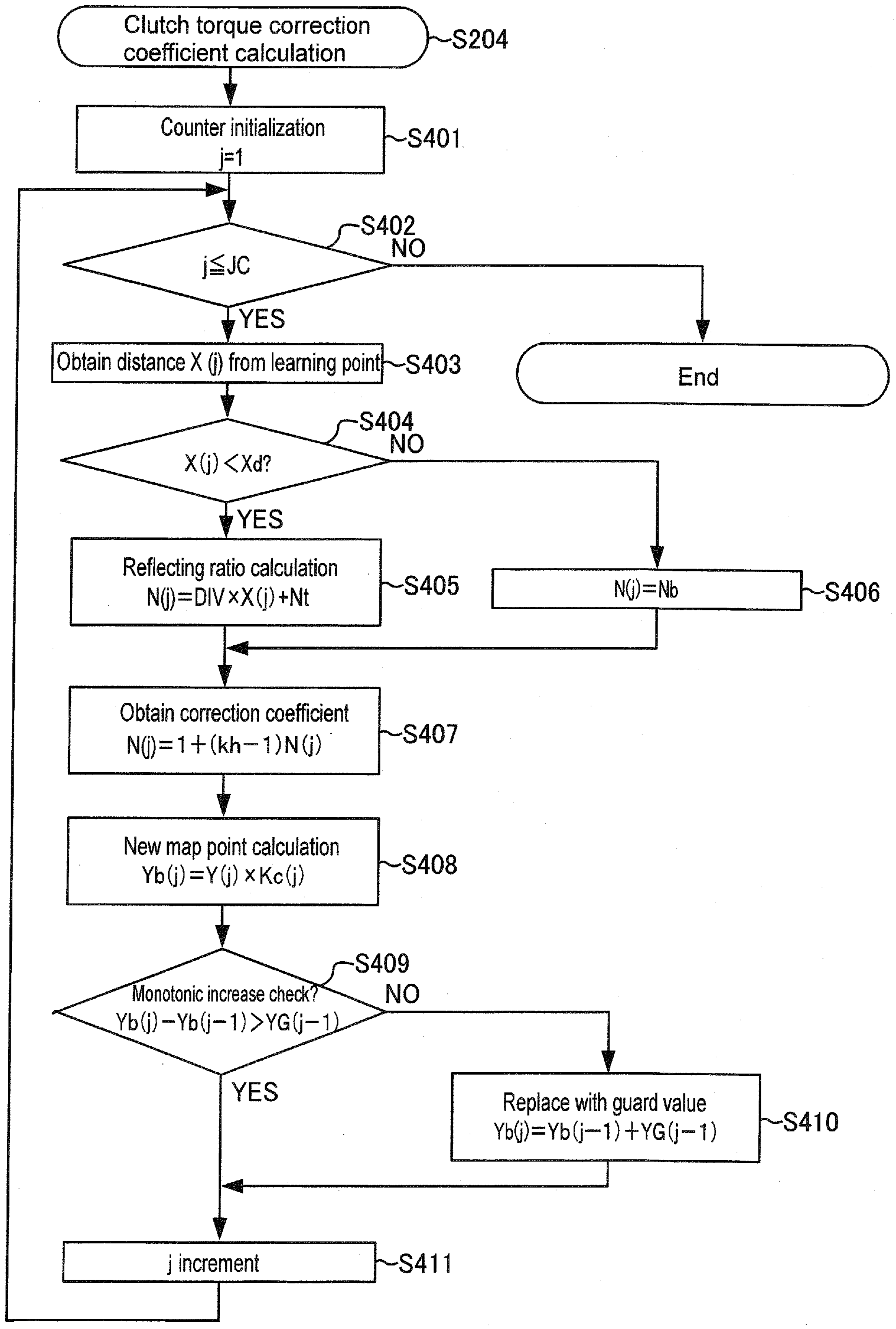

Clutch torque correction coefficient calculation
S204
Counter initialization
j=1
S401
j≦JC
S402
NO
YES
End
Obtain distance X (j) from learning point
S403
X(j)<Xd?
S404
NO
YES
Reflecting ratio calculation
N(j)=DIV×X(j)+Nt
S405
N(j)=Nb
S406
Obtain correction coefficient
N(j)=1+(kh−1)N(j)
S407
New map point calculation
Yb(j)=Y(j)×Kc(j)
S408
Monotonic increase check?
Yb(j)−Yb(j−1)>YG(j−1)
S409
NO
YES
Replace with guard value
Yb(j)=Yb(j−1)+YG(j−1)
S410
j increment
S411

Fig. 11

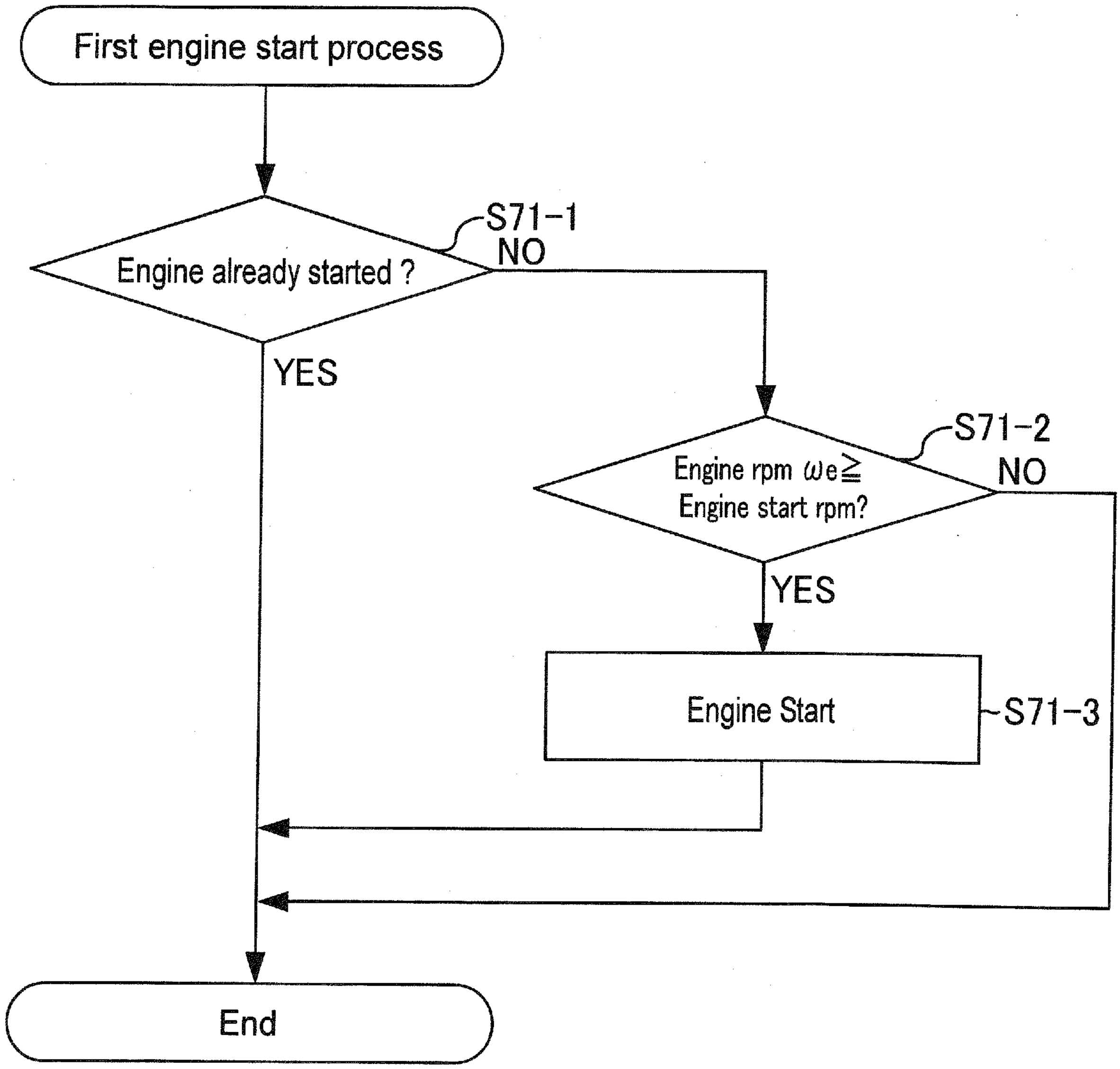
First engine start process
Engine already started ?
S71-1
NO
YES
Engine rpm ωe≧
Engine start rpm?
S71-2
NO
YES
Engine Start
S71-3
End

Fig. 12

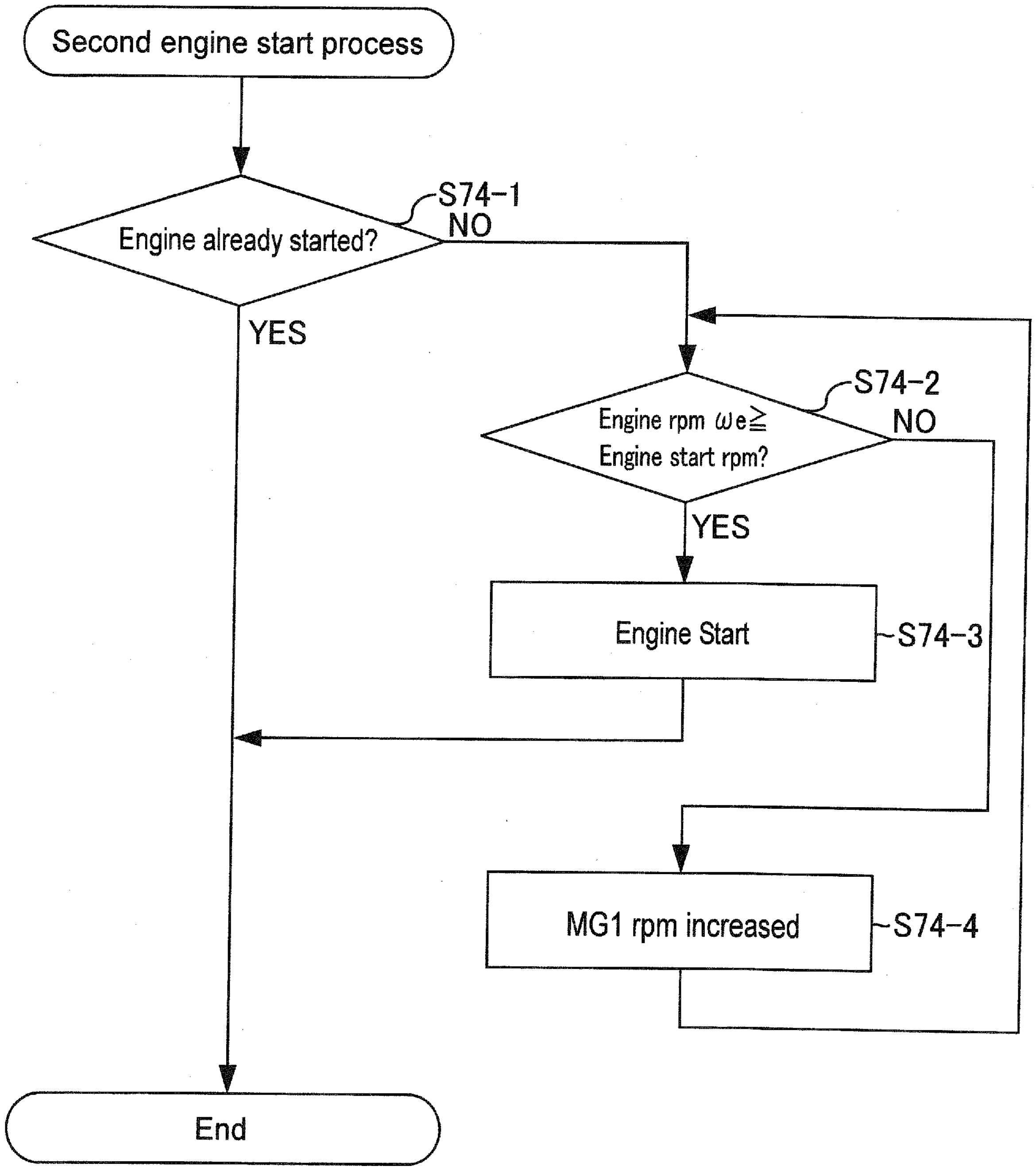
Second engine start process
Engine already started?
S74-1
NO
YES
Engine rpm ωe≧
Engine start rpm?
S74-2
NO
YES
Engine Start
S74-3
MG1 rpm increased
S74-4
End

Fig. 13

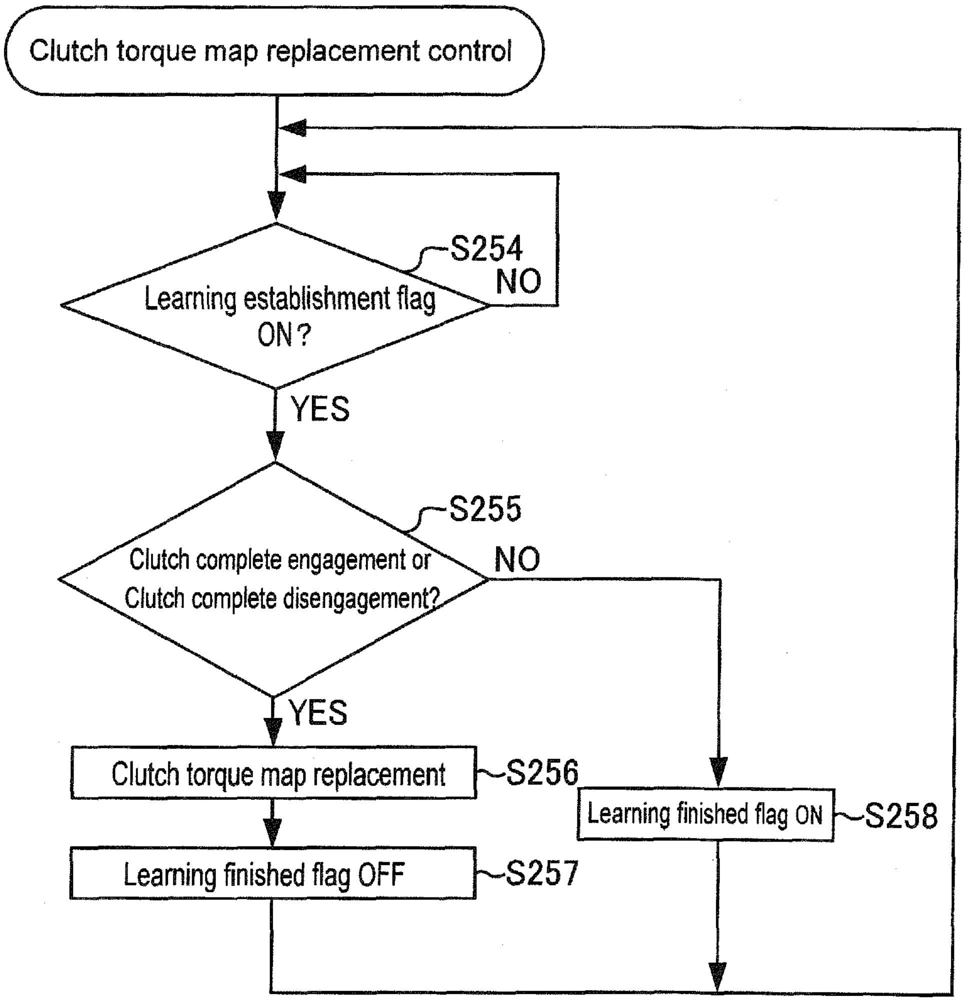
Clutch torque map replacement control
S254
Learning establishment flag ON?
NO
YES
S255
Clutch complete engagement or Clutch complete disengagement?
NO
YES
Clutch torque map replacement
S256
Learning finished flag ON
S258
Learning finished flag OFF
S257

Fig. 14

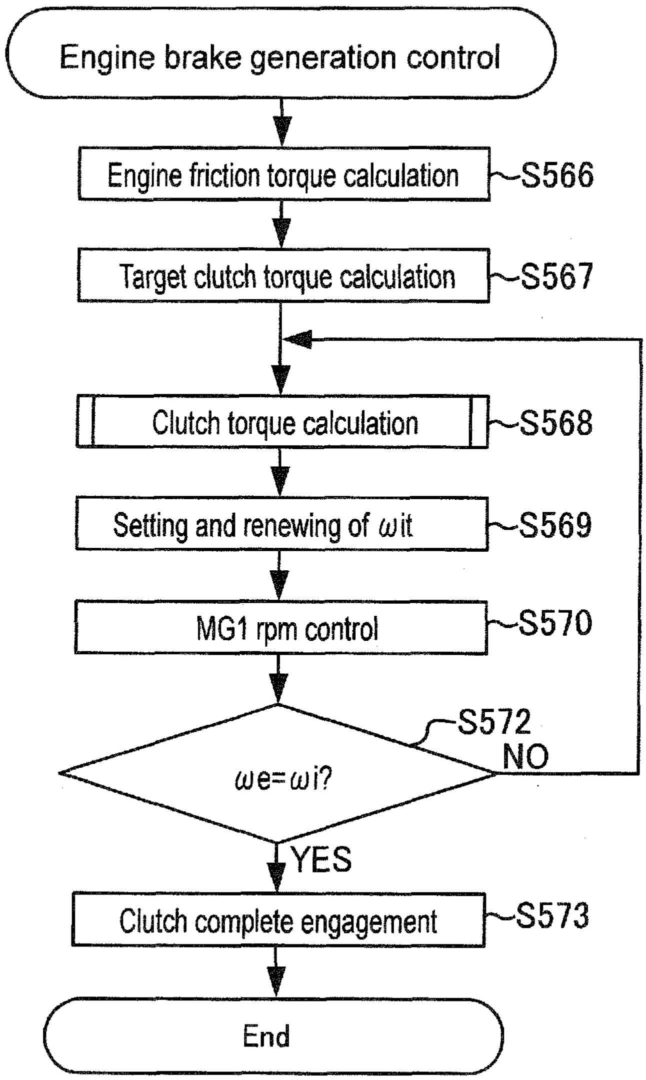
Engine brake generation control
Engine friction torque calculation
S566
Target clutch torque calculation
S567
Clutch torque calculation
S568
Setting and renewing of ωit
S569
MG1 rpm control
S570
S572
NO
ωe=ωi?
YES
Clutch complete engagement
S573
End

Fig. 15

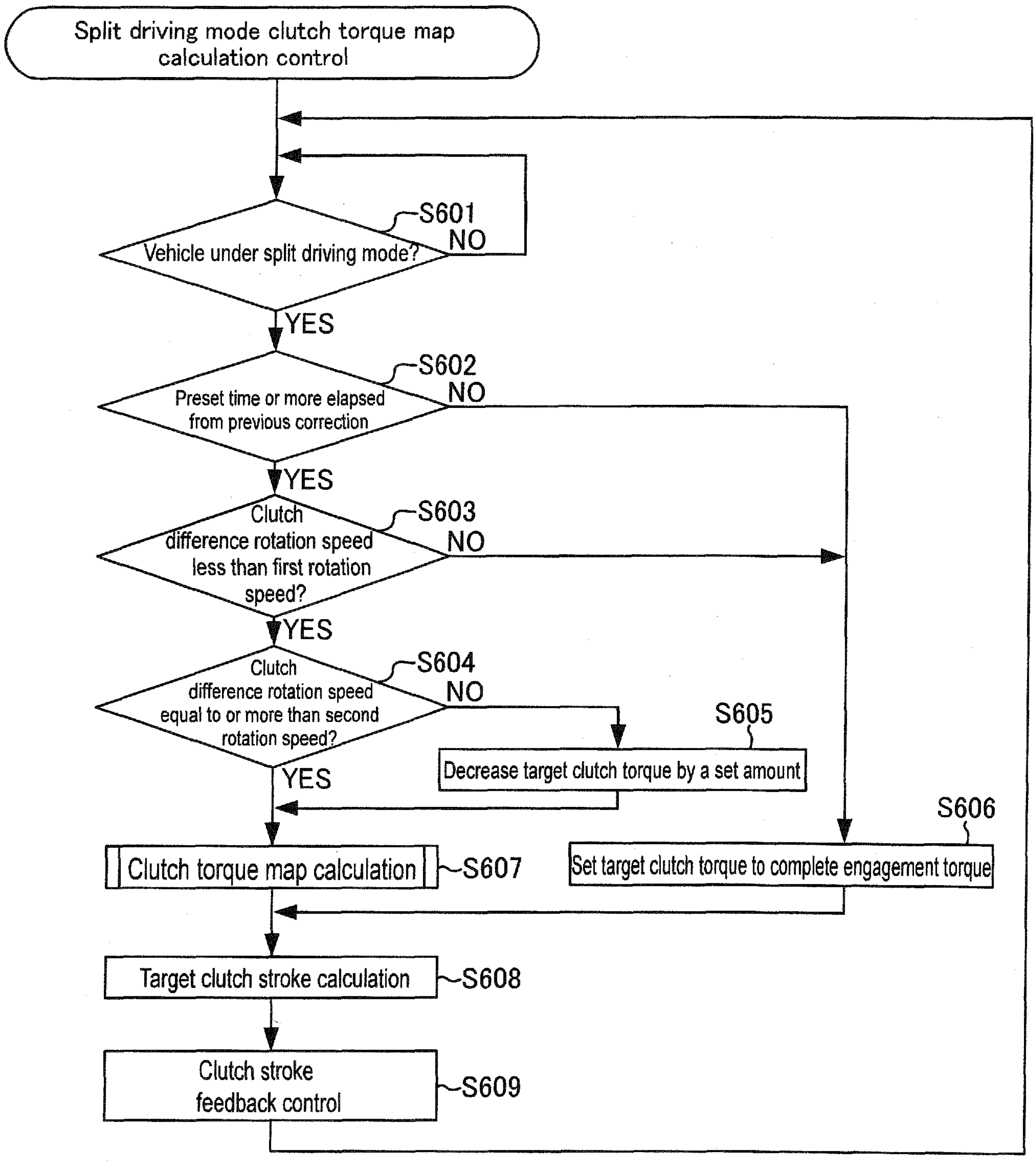
Split driving mode clutch torque map calculation control
Vehicle under split driving mode?
S601
NO
YES
Preset time or more elapsed from previous correction
S602
NO
YES
Clutch difference rotation speed less than first rotation speed?
S603
NO
YES
Clutch difference rotation speed equal to or more than second rotation speed?
S604
NO
YES
S605
Decrease target clutch torque by a set amount
S606
Set target clutch torque to complete engagement torque
Clutch torque map calculation
S607
Target clutch stroke calculation
S608
Clutch stroke feedback control
S609

Fig. 16

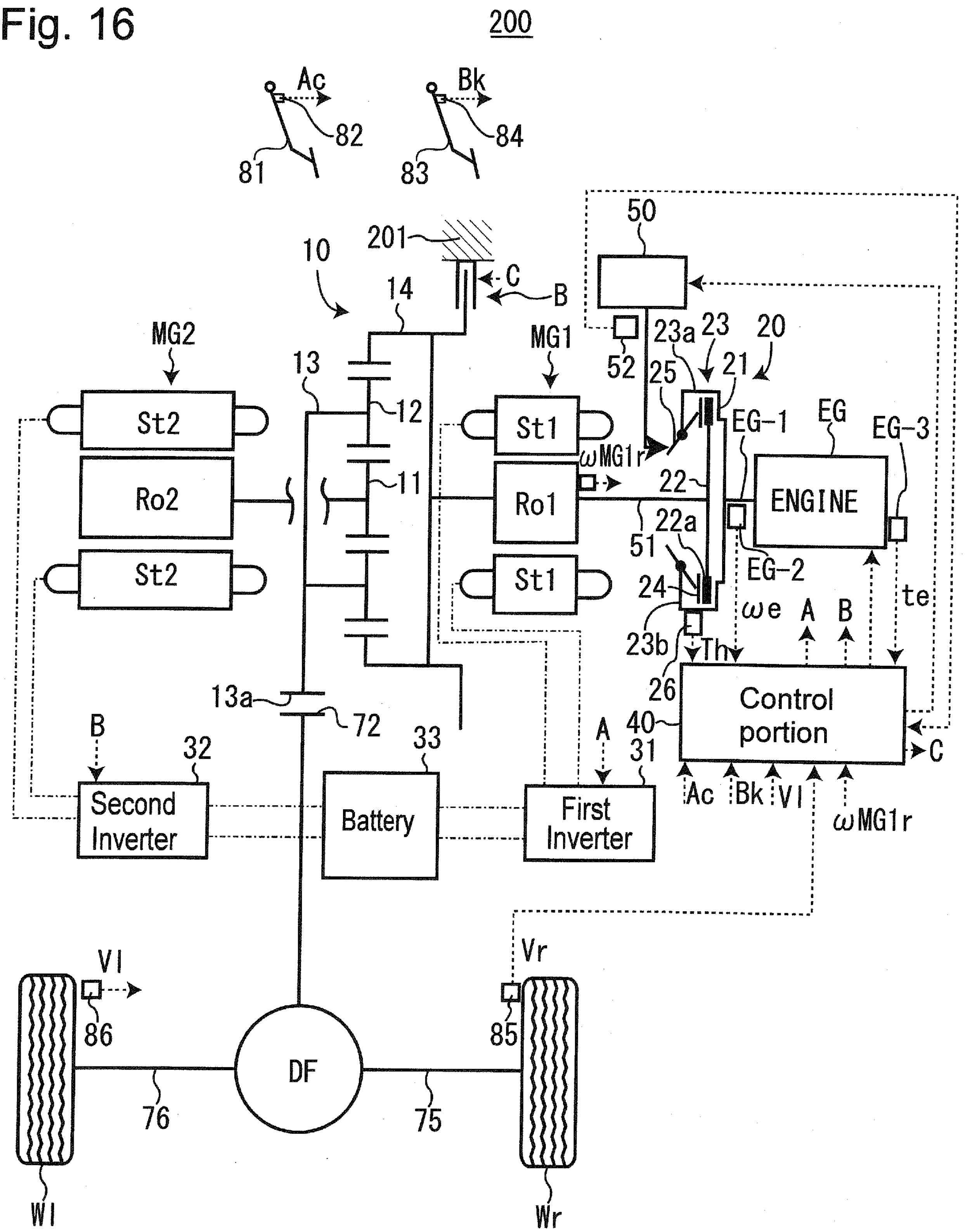
200
Ac
82
81
Bk
84
83
50
201
C
B
10
14
52
23a
23
20
25
21
MG2
MG1
13
12
St2
St1
EG-1
EG
EG-3
ωMG1r
22
11
Ro2
Ro1
ENGINE
51
22a
St2
St1
EG-2
24
te
ωe
A
B
23b
Th
26
13a
72
Control portion
40
33
B
32
A
31
C
Second Inverter
Battery
First Inverter
Ac
Bk
Vl
ωMG1r
Vl
Vr
86
85
DF
76
75
Wl
Wr

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2447124 A2
- JP 2010076678 A
- JP 4394386 B